(19)

Europäisches
Patentamt
European
Patent Office
Office européen
des brevets

(11)  **EP 4 496 208 A1**

(12)  **EUROPEAN PATENT APPLICATION**
published in accordance with Art. 153(4) EPC

(43) Date of publication:
**22.01.2025 Bulletin 2025/04**

(21) Application number: **22932050.2**

(22) Date of filing: **16.03.2022**

(51) International Patent Classification (IPC):
***H02P 21/22*** *(2016.01)*

(52) Cooperative Patent Classification (CPC):
**H02P 21/22**

(86) International application number:
**PCT/JP2022/011911**

(87) International publication number:
**WO 2023/175771 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **HARADA Shingo
Tokyo 100-8310 (JP)**

• **NAKAYA Hirotaka
Tokyo 100-8310 (JP)**
• **FUJIMOTO Chiaki
Tokyo 100-8310 (JP)**
• **SAWADA Kenta
Tokyo 100-8310 (JP)**
• **ISHIKAWA Kosuke
Tokyo 100-8310 (JP)**
• **MORI Tatsuya
Tokyo 100-8310 (JP)**

(74) Representative: **Hoffmann Eitle
Patent- und Rechtsanwälte PartmbB
Arabellastraße 30
81925 München (DE)**

(54)  **CONTROL DEVICE FOR ALTERNATING-CURRENT ROTATING MACHINE, AND ELECTRIC
POWER STEERING DEVICE**

(57)     A control device for an AC rotating machine includes: an inverter configured to apply a voltage to the AC rotating machine; a DC power supply configured to supply DC power to the inverter; an electric current detector configured to detect a rotating machine electric current flowing through the AC rotating machine; a first axis voltage command value calculator configured to calculate a voltage command value of a first axis between two rotational axes of the AC rotating machine; and a second axis voltage command value calculator configured to calculate a voltage command value of a second axis between the two rotational axes. The first axis voltage command value calculator calculates the voltage command value of the first axis based on a corrected first deviation obtained by multiplying a first deviation by a correction gain, a second deviation, and a rotational angular velocity. A set value of the correction gain is increased when a physical quantity in the AC rotating machine has rapidly changed or when an output voltage of the DC power supply has increased.

FIG. 1

**EP 4 496 208 A1**

**Description**

POWER-STEERING DEVICE

[Technical Field]

The present disclosure relates to a control device for an alternating current (AC) rotating machine, and an electric power-steering device.

[Background Art]

Patent Document 1 discloses technology related to so-called non-interference control for compensating for interference terms in two rotational axes (for example, d- and q-axes) in vector control for an AC rotating machine. Specifically, the control device of Patent Document 1 includes a non-interference controller configured to calculate interference components of the d- and q-axes, a non-interference error corrector configured to correct errors of the interference components, an electric current proportional-integral (PI) controller configured to perform PI calculation in accordance with electric current deviations of the d- and q-axes, and the like.

[Citation List]

[Patent Document]

[Patent Document 1]
Japanese Unexamined Patent Application, First Publication No. 2010-119245

[Summary of Invention]

[PROBLEM TO BE SOLVED BY THE INVENTION]

In the electric current PI controller of Patent Document 1, if noise is included in a rotating machine electric current value detected for calculating the electric current deviation, the noise causes an increase in drive sound in the AC rotating machine, torque ripple, or the like. In order to suppress this phenomenon, it is possible to decrease the responsiveness of the electric current PI controller, but in this case, the following problems occur.

In the AC rotating machine, for example, when the rotational angular velocity rapidly decreases, an induced voltage proportional to the rotational angular velocity also rapidly decreases, and as a result, the output voltage of an inverter may be excessive compared to a voltage required to set the rotating machine electric current as a target value. Moreover, this situation may be caused by a trigger other than a rapid decrease in the rotational angular velocity.

When the responsiveness of the electric current PI controller of Patent Document 1 is decreased, the period of time for the output voltage of the inverter to be excessive in the above situation is prolonged, and the prolonged time becomes a factor that causes an overcurrent state of the AC rotating machine.

The present disclosure has been made in view of the above circumstances, and an objective thereof is to provide a control device for an AC rotating machine and an electric power-steering device capable of suppressing the occurrence of an overcurrent state while suppressing an increase in drive sound and the like caused by noise included in a detected rotating machine electric current value.

[MEANS TO SOLVE THE PROBLEM]

In order to achieve the aforementioned objective, a control device for an AC rotating machine according to an aspect of the present disclosure includes: an inverter configured to apply a voltage to the AC rotating machine; a direct current (DC) power supply configured to supply DC power to the inverter; an electric current detector configured to detect a rotating machine electric current flowing through the AC rotating machine; a first axis voltage command value calculator configured to calculate a voltage command value of a first axis between two rotational axes of the AC rotating machine; and a second axis voltage command value calculator configured to calculate a voltage command value of a second axis between the two rotational axes The first axis voltage command value calculator calculates the voltage command value of the first axis based on a corrected first deviation obtained by multiplying, by a correction gain, a first deviation that is a deviation between an electric current command value of the first axis and a detected electric current value of the first axis of the rotating machine electric current, a second deviation that is a deviation between an electric current command value of the second axis and a detected electric current value of the second axis of the rotating machine electric current, and a rotational angular velocity of the AC rotating machine. A set value of the correction gain is increased when a physical quantity in the AC rotating machine has rapidly changed or when an output voltage of the DC power supply has increased.

Moreover, an electric power-steering device according to an aspect of the present disclosure includes: the control device according to the above aspect; the AC rotating machine; and a driving force transmission mechanism configured to transmit a driving force of the AC rotating machine to a steering system of a vehicle .

[EFFECTS OF THE INVENTION]

According to the present disclosure, it is possible to provide a control device for an AC rotating machine and an electric power-steering device capable of suppressing the occurrence of an overcurrent state while suppressing an increase in drive sound and the like caused by noise included in a detected rotating machine electric current value.

[Brief Description of Drawings]

FIG. 1 is a block diagram showing a schematic configuration of a control device of a rotating machine according to Embodiment 1.

FIG. 2 is a diagram for showing a switching signal generation principle in Embodiment 1.

FIG. 3 is a block diagram showing a configuration of a d-axis voltage command value calculator of FIG. 1.

FIG. 4 is a block diagram showing a configuration of a q-axis voltage command value calculator of FIG. 1.

FIG. 5 is a flowchart showing an example of a process performed by a corrected voltage generator of FIG. 1.

FIG. 6 is a diagram showing an example of waveforms of a voltage command value and a corrected voltage command value in Embodiment 1.

FIG. 7 is a Bode plot diagram showing transmission characteristics from a q-axis electric current command value to a detected q-axis electric current value when a rotational angular velocity is high in the control device according to Embodiment 1.

FIG. 8 is a diagram showing a relationship between a correction gain and an amount of change in an absolute value of an angular velocity in Embodiment 1.

FIG. 9 is a diagram showing a relationship between an integral output switching gain and an amount of change in an absolute value of the rotational angular velocity in Embodiment 1.

FIG. 10 is a diagram showing a relationship between an integral input switching gain and a d-axis electric current deviation in Embodiment 1.

FIG. 11 is a block diagram showing a schematic configuration of a control device of a rotating machine according to a first modification of Embodiment 1.

FIG. 12 is a block diagram showing a configuration of a d-axis voltage command value calculator according to the first modification of Embodiment 1.

FIG. 13 is a block diagram showing a configuration of a q-axis voltage command value calculator according to the first modification of Embodiment 1.

FIG. 14 is a diagram showing a relationship between a correction gain and an amount of change in an overcurrent amount in the first modification of Embodiment 1.

FIG. 15 is a diagram showing a relationship between an integral output switching gain and an amount of change in the overcurrent amount in the first modification of Embodiment 1.

FIG. 16 is a block diagram showing a schematic configuration of a control device for a rotating machine according to a second modification of Embodiment 1.

FIG. 17 is a block diagram showing a configuration of a d-axis voltage command value calculator according to the second modification of Embodiment 1.

FIG. 18 is a block diagram showing a configuration of a q-axis voltage command value calculator according to the second modification of Embodiment 1.

FIG. 19 is a diagram showing a relationship between a correction gain and an amount of change in a DC bus voltage in the second modification of Embodiment 1.

FIG. 20 is a diagram showing a relationship between an integral output switching gain and an amount of change in the DC bus voltage in the second modification of Embodiment 1.

FIG. 21 is a block diagram showing a schematic configuration of a control device for a rotating machine according to Embodiment 2.

FIG. 22 is a block diagram showing a configuration of a d-axis voltage command value calculator according to Embodiment 2.

FIG. 23 is a block diagram showing a configuration of a q-axis voltage command value calculator according to Embodiment 2.

FIG. 24 is a diagram showing a relationship between a proportional gain, a limit gain, and a voltage amplitude in Embodiment 2.

FIG. 25 is a graph showing an example of a waveform of a voltage between both ends of a shunt resistor in Embodiment 2.

FIG. 26 is a diagram showing a case where a partial corrected voltage command value is greater than an upper limit value in Embodiment 2.

FIG. 27 is a block diagram showing a schematic configuration of an electric power-steering device according to Embodiment 3.

FIG. 28 is a graph showing a relationship between steering torque, a q-axis electric current command value, and a vehicle speed in Embodiment 3.

FIG. 29 is a diagram showing a relationship between the vehicle speed and a proportional gain in Embodiment 3.

FIG. 30 is a block diagram showing a schematic configuration of an electric power-steering device according to Embodiment 4.

FIG. 31 is a graph showing a relationship between an amount of change in steering torque and a limit gain in Embodiment 4.

[Description of Embodiments]

Hereinafter, a control device for a rotating machine and an electric power-steering device according to the present disclosure will be described in detail with reference to the drawings.

Embodiment 1

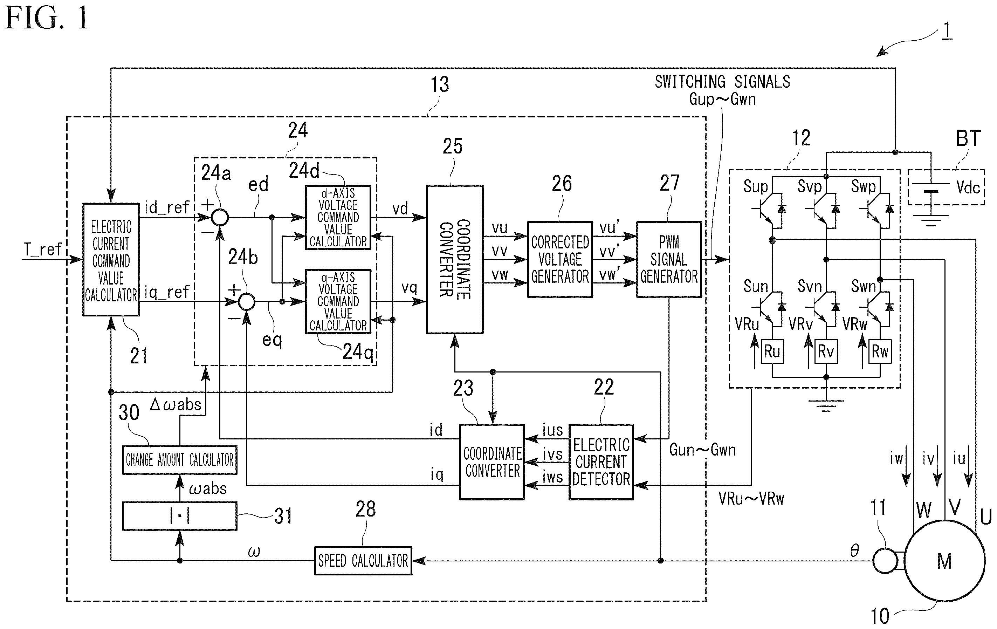

FIG. 1 is a block diagram showing a schematic configuration of a control device for a rotating machine according to Embodiment 1. As shown in FIG. 1, a control device 1 includes a rotor position detector 11, an inverter 12, and a controller 13. The control device 1 controls a rotating machine 10 based on a torque command T_ref serving as a control command input from the outside of the control device 1.

The rotating machine 10 is a three-phase AC rotating machine having three-phase windings U, V, and W. Moreover, the rotating machine 10 is an AC rotating machine that can be controlled based on two rotational axes. In the present specification, the "two rotational axes" refer to two axes that rotate synchronously with the rotor of the rotating machine 10 and that are orthogonal to each other in a lateral cross-section. The "lateral cross-section" is a cross-section perpendicular to the central axis of the rotor. For example, the two rotational axes may be d- and q-axes. The d-axis is an axis that connects the central axis of the rotor and a magnetic pole. The q-axis is an axis orthogonal to both the d-axis and the central axis. Moreover, the two rotational axes may be $\gamma$- and $\delta$-axes. The $\gamma$-axis is an axis that is shifted in a rotational direction with respect to the d-axis. The $\delta$-axis is an axis orthogonal to both the $\gamma$-axis and the central axis. Either one of the two rotational axes is referred to as a first axis, and the other is referred to as a second axis. For example, when the d-axis is referred to as the first axis, the q-axis is referred to as the second axis. The q-axis may be the first axis, and the d-axis may be the second axis. Likewise, when the $\gamma$-axis is referred to as the first axis, the $\delta$-axis may be referred to as the second axis.

Hereinafter, a case where the rotating machine 10 is a permanent magnet synchronous rotating machine and the two rotational axes are the d- and q-axes will be described. However, the rotating machine 10 may be, for example, a winding field synchronous rotating machine, an induction rotating machine, a synchronous reluctance motor, or the like. Moreover, the d-axis and the q-axis in the following disclosure content may be replaced with the $\delta$-axis and the $\gamma$-axis.

The rotor position detector 11 includes a resolver, an encoder, a magnetoresistive (MR) sensor, and the like, and uses these to detect a rotor position $\theta$. The rotor position $\theta$ is a position of the rotor provided in the rotating machine 10 in the rotational direction. In the present embodiment, the rotor position $\theta$ of the rotating machine 10 is detected by using the rotor position detector 11. However, a configuration for estimating the rotor position $\theta$ of the rotating machine 10 without using the rotor position detector 11 can also be adopted. That is, in the present disclosure, the control device 1 may not include the rotor position detector 11.

The inverter 12 is a power converter that applies a voltage to the rotating machine 10. Specifically, under the control of the controller 13, the inverter 12 converts DC power supplied from a DC power supply BT into AC power and supplies the AC power obtained in the conversion process to the rotating machine 10. The DC power supply BT includes, in addition to a battery, equipment for supplying DC power, such as a DC-DC converter, a diode rectifier, and a PWM rectifier. In the present specification, the output voltage (DC bus voltage) of the DC power supply BT is denoted by Vdc.

The inverter 12 includes upper arm-switching elements Sup, Svp, and Swp, lower arm-switching elements Sun, Svn, and Swn, and shunt resistors Ru, Rv, and Rw. The upper arm-switching elements Sup, Svp, and Swp are connected to the positive electrode of the DC power supply BT. The lower arm-switching elements Sun, Svn, and Swn are connected to the upper arm-switching elements Sup, Svp, and Swp, respectively, and are connected to the negative electrode of the DC power supply BT via the shunt resistors Ru, Rv, and Rw, respectively.

Here, a U-phase series circuit is formed of the upper arm-switching element Sup, the lower arm-switching element Sun, and the shunt resistor Ru. In this U-phase series circuit, the connection point between the upper arm-switching element Sup and the lower arm-switching element Sun is connected to the winding U of the rotating machine 10.

Moreover, a V-phase series circuit is formed of the upper arm-switching element Svp, the lower arm-switching element Svn, and the shunt resistor Rv. In this V-phase series circuit, the connection point between the upper arm-switching element Svp and the lower arm-switching element Svn is connected to the winding V of the rotating machine 10.

Moreover, a W-phase series circuit is formed of the upper arm-switching element Swp, the lower arm-switching element Swn, and the shunt resistor Rw. In this W-phase series circuit, the connection point between the upper arm-switching element Swp and the lower arm-switching element Swn is connected to the winding W of the rotating machine 10.

For the upper arm-switching elements Sup, Svp, and Swp and the lower arm-switching elements Sun, Svn, and Swn, semiconductor switches such as an insulated gate bipolar transistor (IGBT), a bipolar transistor, and a metal-oxide-semiconductor field effect transistor (MOSFET) can be used.

Switching signals Gup, Gvp, and Gwp output from the controller 13 are input to the upper arm-switching elements Sup, Svp, and Swp, respectively. Switching signals Gun, Gvn, and Gwn output from the controller 13 are input to the lower arm-switching elements Sun, Svn, and Swn, respectively. The upper arm-switching elements Sup, Svp, and Swp and the lower arm-switching elements Sun, Svn, and Swn are turned on or off by the switching signals Gup, Gvp, Gwp, Gun, Gvn, and Gwn output from the controller 13. In the present specification and drawings, the switching signals Gup, Gvp, Gwp, Gun, Gvn, and Gwn may be collectively referred to as "switching signals Gup to Gwn."

For example, the upper arm-switching element Sup is in an ON state when the switching signal Gup is "ON command (= 1)," and the upper arm-switching element Sup is in an OFF state when the switching signal Gup is "OFF command (= 0)." The same is true for other switching elements (the upper arm-switching elements Svp and Swp and the lower arm-switching elements Sun, Svn, and Swn). In this way, the inverter 12 generates, from the DC power supplied by the DC power supply BT, AC power to be supplied to the rotating machine 10.

The shunt resistors Ru, Rv, and Rw are resistance elements for electric current detection.

The shunt resistor Ru outputs, to the controller 13, a voltage VRu (= -Ru×iu) between both ends thereof proportional to an electric current (rotating machine electric current) iu flowing through the winding U of the rotating machine 10. The shunt resistor Rv outputs, to the controller 13, a voltage VRv (= -Rv×iv) between both ends thereof proportional to an electric current (rotating machine electric current) iv flowing through the winding V of the rotating machine 10. The shunt resistor Rw outputs, to the controller 13, a voltage VRw (= -Rw×iw) between both ends thereof proportional to an electric current (rotating machine electric current) iw flowing through the winding W of the rotating machine 10. In the present specification and drawings, the voltages VRu, VRv, and VRw between both ends may be collectively referred to as "both-end voltages VRu to VRw."

Here, the both-end voltages VRu, VRv, and VRw are values obtained by multiplying the rotating machine electric currents iu, iv, and iw by the resistance values of the shunt resistors Ru, Rv, and Rw, and are quantities proportional to the electric currents iu, iv, and iw. For this reason, it can be said that the both-end voltages VRu, VRv, and VRw are values obtained by detecting electric currents (detected values of the rotating machine electric currents).

Furthermore, the inverter 12 may be integrated into the rotating machine 10. The integrated inverter 12 and the rotating machine 10 are referred to as a power pack.

The controller 13 uses, as input values, the torque command T_ref, the both-end voltages VRu, VRv, and VRw, and the rotor position θ and generates the switching signals Gup to Gwn for driving the inverter 12 based thereon. The controller 13 is a PWM controller implemented by a discrete-time calculator such as a microcomputer or a digital signal processor (DSP). The controller 13 includes an electric current command value calculator 21, an electric current detector 22, a coordinate converter 23 (detection coordinate converter), a voltage command value calculation unit 24, a coordinate converter 25 (control coordinate converter), a corrected voltage generator 26, a PWM signal generator 27, a speed calculator 28, a change amount calculator 30, and an absolute value calculator 31.

The speed calculator 28 obtains a rotational angular velocity ω of the rotating machine 10 by performing differential calculation or difference calculation on the rotor position θ. The speed calculator 28 inputs the obtained rotational angular velocity ω to the electric current command value calculator 21 and a d-axis voltage command value calculator 24d and a q-axis voltage command value calculator 24q of the voltage command value calculation unit 24.

The electric current command value calculator 21 calculates electric current command values id_ref and iq_ref based on the torque command T_ref, the DC bus voltage Vdc, and the rotational angular velocity ω. The electric current command values id_ref and iq_ref are command values (target values) of the electric current to flow through the rotating machine 10. id_ref also denotes a "weak field current command value," and iq_ref also denotes a "torque current command value." As the calculation method executed by the electric current command value calculator 21, maximum torque per ampere (MTPA) control, maximum torque per voltage (MTPV) control, and weak magnetic flux control which are well known may be used in an appropriate combination for each operation range (a range of speed-torque characteristics). Also, the rotational angular velocity ω may be converted into the rotational speed of the rotor, and each control process may be performed using the rotational speed.

Next, the PWM signal generator 27 will be described. The PWM signal generator 27 outputs pulse width modulation (PWM) modulated switching signals Gup to Gwn based on corrected voltage command values vu', vv', and vw' output from the corrected voltage generator 26. The corrected voltage command values vu', vv', and vw' will be described below.

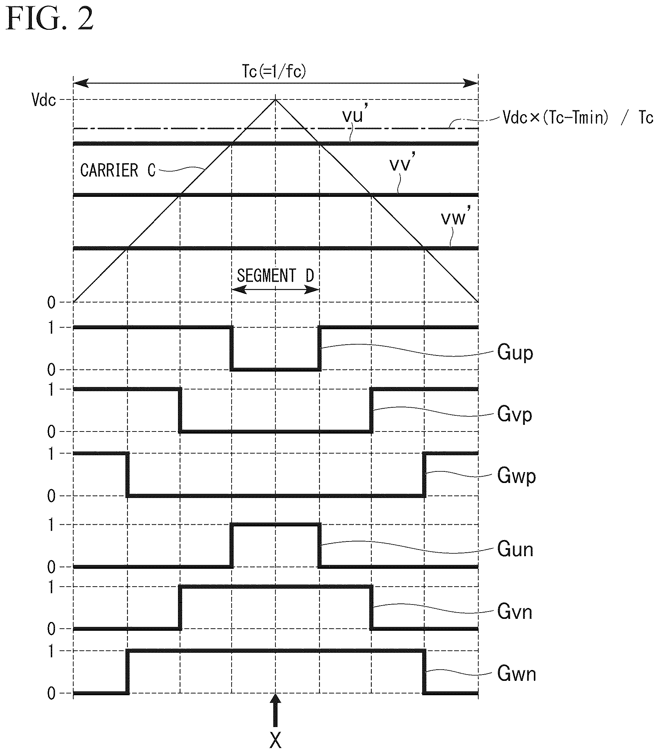

FIG. 2 is a diagram for showing a switching signal generation principle in Embodiment 1. The PWM signal generator 27 generates the switching signals Gup to Gwn by comparing the corrected voltage command values vu', vv', and vw' with a carrier triangle wave (carrier) C having a period Tc (frequency fc). The corrected voltage command values vu', vv', and vw' correspond to the U-phase, the V-phase, and the W-phase, respectively.

Specifically, the PWM signal generator 27 turns on the switching signal Gup ("1") and turns off the switching signal Gun ("0") if the corrected voltage command value vu' is greater than the carrier triangle wave C. In contrast, the PWM signal generator 27 turns off the switching signal Gup ("0") and turns on the switching signal Gun ("1") if the corrected voltage command value vu' is less than the carrier triangle wave C.

Moreover, the PWM signal generator 27 turns on the switching signal Gvp ("1") and turns off the switching signal Gvn ("0") if the corrected voltage command value vv' is greater than the carrier triangle wave C. In contrast, the PWM signal generator 27 turns off the switching signal Gvp ("0") and turns on the switching signal Gvn ("1") if the corrected voltage command value vv' is less than the carrier triangle wave C.

Moreover, the PWM signal generator 27 turns on the switching signal Gwp ("1") and turns off the switching signal Gwn ("0") if the corrected voltage command value vw' is greater than the carrier triangle wave C. In contrast, the PWM signal generator 27 turns off the switching signal Gwp ("0") and turns on the switching signal Gwn ("1") if the corrected voltage command value vw' is less than the carrier triangle wave C.

Further, a short circuit prevention time (dead time) may be provided in the switching signals Gup to Gwn such that the upper arm-switching elements Sup, Svp, and Swp and the lower arm-switching elements Sun, Svn, and Swn of the inverter 12 are not turned on at the same time.

The switching signals Gup to Gwn include a pattern in which all of the lower arm-switching elements Sun, Svn, and Swn are turned on during one period of the electric angle of the rotating machine 10. Specifically, a segment D shown in FIG. 2 has a pattern in which all of the switching signals Gun, Gvn, and Gwn are turned on (1).

Here, the PWM modulated voltage applied from the inverter 12 to the rotating machine 10 includes components of integer multiples of the period Tc of the carrier triangle wave C in addition to components of the corrected voltage command values vu', vv', and vw'. As a result, an electric current of a component of an integer multiple of the period Tc is caused to pass through the rotating machine 10, and the rotating machine 10 may make abnormal noise according to a value of the period Tc.

In order to prevent the occurrence of such abnormal noise, for example, when the rotating machine 10 is used as a motor that performs the steering assist of electric power steering, it is only necessary to set the period Tc of the carrier triangle wave C to 60 [μs] or less. By setting Tc = 60 [μs], an abnormal noise frequency fc (= 1/Tc) becomes 16.6 kHz, and it is less likely to become noise that humans find unpleasant. More preferably, it is only necessary to set the period Tc of the carrier triangle wave C to about 50 [μs]. By setting Tc = 50 [μs], the abnormal noise frequency fc (= 1/Tc) becomes about 20 kHz, which is substantially inaudible to humans. A frequency range audible to humans is approximately 20 Hz to 20 kHz. Hereinafter, the case of Tc = 50 [μs] will be described.

Next, the electric current detector 22 shown in FIG. 1 will be described. The electric current detector 22 outputs pre-conversion detected electric currents ius, ivs, and iws using the voltages VRu, VRv, and VRw between both ends of the shunt resistors Ru, Rv, and Rw and the switching signals Gup to Gwn output from the PWM signal generator 27. Specifically, the electric current detector 22 acquires the voltages VRu, VRv, and VRw between both ends of the shunt resistors Ru, Rv, and Rw at a timing "X" shown in FIG. 2. The timing "X" is a timing at which the carrier triangle wave C has a maximum value (the DC bus voltage Vdc).

At the timing "X," as shown in FIG. 2, the switching signals Gun, Gvn, and Gwn input to the lower arm-switching elements Sun, Svn, and Swn are all ON ("1"). Thus, the electric current detector 22 acquires values of the pre-conversion detected electric currents ius, ivs, and iws by dividing the voltages VRu, VRv, and VRw between both ends of the shunt resistors Ru, Rv, and Rw by -Ru, -Rv, and -Rw, respectively.

The coordinate converter 23 performs coordinate conversion based on the pre-conversion detected electric currents ius, ivs, and iws detected by the electric current detector 22 and the rotor position θ detected by the rotor position detector 11. Thereby, the coordinate converter 23 calculates detected electric current values id and iq on the two rotational axes (the d- and q-axes). Moreover, the coordinate converter 23 inputs calculation results (detected electric current values id and iq after coordinate conversion) to the voltage command value calculation unit 24.

The voltage command value calculation unit 24 calculates voltage command values vd and vq on the two rotational axes (the d- and q-axes) based on the electric current command values id_ref and iq_ref calculated by the electric current command value calculator 21, the detected electric current values id and iq, the rotational angular velocity ω, the DC bus voltage Vdc, and an amount of change Δωabs in an absolute value of an angular velocity calculated by the change amount calculator 30. The change amount calculator 30 will be described below.

Hereinafter, the voltage command value calculation unit 24 will be described in detail.

The voltage command value calculation unit 24 includes a first deviation calculator 24a, a second deviation calculator 24b, the d-axis voltage command value calculator 24d, and the q-axis voltage command value calculator 24q.

The first deviation calculator 24a calculates a d-axis electric current deviation ed that is a deviation between a d-axis electric current command value id_ref and a detected d-axis electric current value id. The second deviation calculator 24b calculates a q-axis electric current deviation eq that is a deviation between a q-axis electric current command value iq_ref and a detected q-axis electric current value iq. The value of the d-axis electric current deviation ed calculated by the first deviation calculator 24a is input to the d-axis voltage command value calculator 24d and the q-axis voltage command value calculator 24q. The value of the q-axis electric current deviation eq calculated by the second deviation calculator 24b is input to the d-axis voltage command value calculator 24d and the q-axis voltage command value calculator 24q.

The d-axis voltage command value calculator 24d calculates a d-axis voltage command value vd using the d-axis electric current deviation ed, the q-axis electric current deviation eq, the DC bus voltage Vdc, the rotational angular velocity ω, and the amount of change Δωabs. The q-axis voltage command value calculator 24q calculates a q-axis voltage command value vq using the q-axis electric current deviation eq, the d-axis electric current deviation ed, the DC bus voltage Vdc, the rotational angular velocity ω, and the amount of change Δωabs.

In the present specification, the deviation between the electric current command value and the detected electric current value on the first axis of the two rotational axes may be referred to as a first deviation. Likewise, the deviation between the electric current command value and the detected electric current value on the second axis of the two rotational axes may be referred to as a second deviation. For example, when the d-axis is the first axis, the d-axis electric current deviation ed, which is the deviation between the electric current command value id_ref on the d-axis and the detected d-axis electric current value id, is the "first deviation," and the q-axis electric current deviation eq is the "second deviation." Likewise, when the q-axis is the first axis, the q-axis electric current deviation eq is the "first deviation," and the d-axis electric current deviation ed is the "second deviation." Furthermore, the first deviation that has been corrected may be referred to as a "corrected first deviation," and the second deviation that has been corrected may be referred to as a "corrected second deviation."

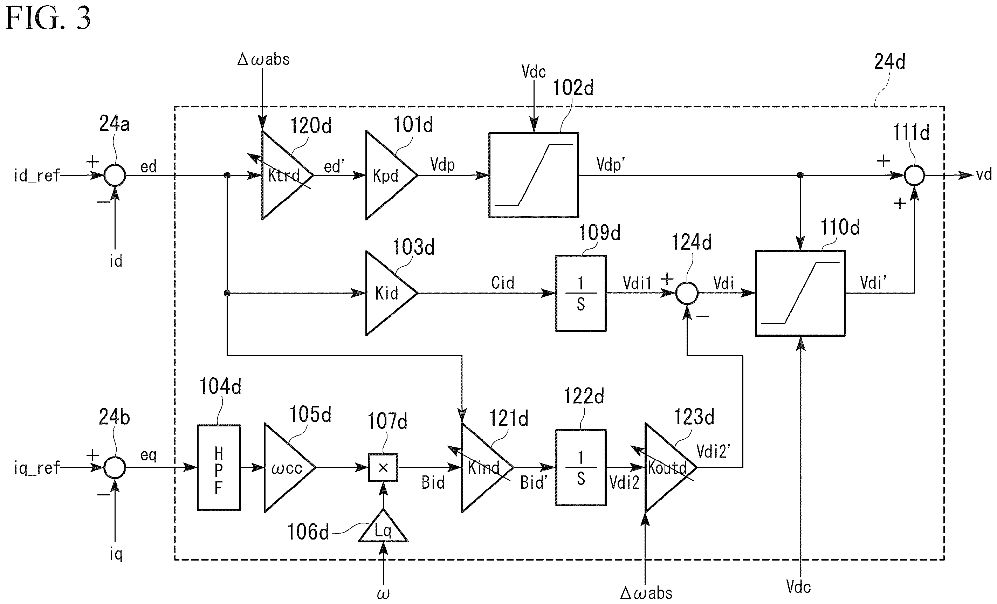

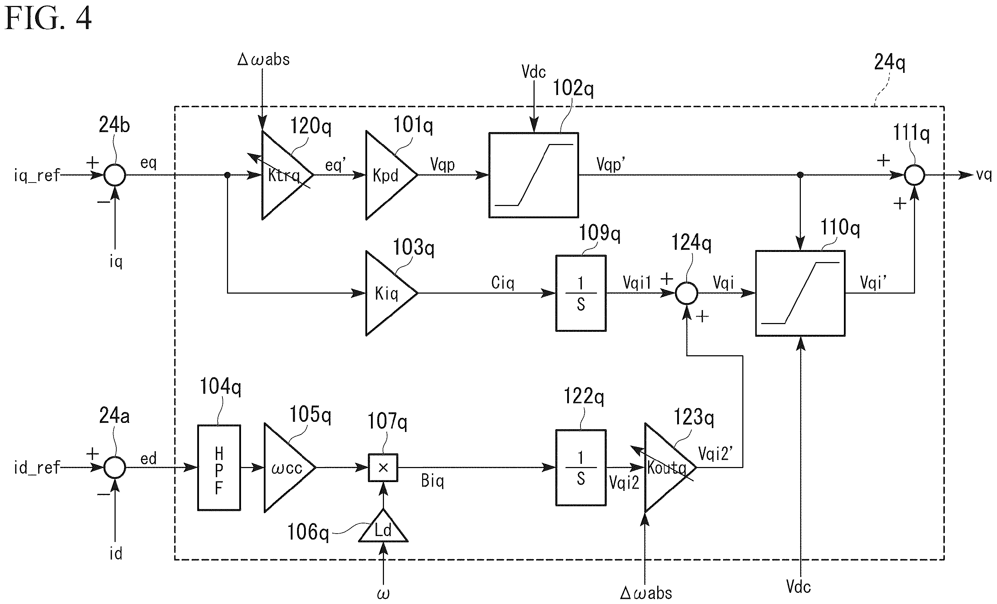

Details of the d-axis voltage command value calculator 24d are shown in FIG. 3, and details of the q-axis voltage command value calculator 24q are shown in FIG. 4.

Hereinafter, the d-axis voltage command value calculator 24d will be described with reference to FIG. 3. The d-axis voltage command value calculator 24d includes a d-axis transient amplifier 120d, a d-axis proportional amplifier 101d, a limiter 102d, a d-axis integral amplifier 103d, a high-pass filter (HPF) 104d, a response angular frequency amplifier 105d, an inductance amplifier 106d, a multiplier 107d, an integrator 109d (own-axis integrator), an other-axis integral input amplifier 121d, an integrator 122d (other-axis integrator), an other-axis integral output amplifier 123d, a subtractor 124d, a limiter 110d, and an adder 111d.

The d-axis transient amplifier 120d calculates the corrected d-axis electric current deviation ed' by multiplying the d-axis electric current deviation ed by Ktrd. That is, ed' = ed×Ktrd. "Ktrd" denotes a correction gain whose value changes based on the amount of change Δωabs, and details thereof will be described below.

The d-axis proportional amplifier 101d calculates a d-axis proportional output Vdp by multiplying the corrected d-axis electric current deviation ed' by Kpd. That is, Vdp = ed'×Kpd. "Kpd" denotes a d-axis proportional gain that is multiplied in order that the rotating machine electric current actually flowing with respect to the electric current command value id_ref becomes a preferred response. For example, Kpd = ωcc×Ld. Here, ωcc denotes a response angular frequency (more specifically, a reciprocal of a time constant of a feedback control system) for adjusting the frequency response of the rotating machine electric current with respect to the electric current command value to be in a preferred range, and Ld denotes a d-axis inductance of the rotating machine 10. However, the value of Kpd is not limited to ωcc×Ld, and may be appropriately adjusted by actually measuring the responsiveness of the rotating machine electric current actually flowing with respect to the electric current command value id_ref, or the like. The d-axis proportional output Vdp calculated by the d-axis proportional amplifier 101d is input to the limiter 102d.

The limiter 102d compares the d-axis proportional output Vdp with an upper limit value (Vlimit) and a lower limit value (-Vlimit) and outputs a limited d-axis proportional output Vdp' based on a comparison result. However, Vlimit = Kmax•Vdc/$2^{0.5}$. Kmax denotes a maximum voltage utilization rate of the inverter 12 and is set appropriately in accordance with a desired output. For example, Kmax may be 1.

Specific calculations performed by the limiter 102d are as follows.

(A) In the case of Vdp < -Vlimit, Vdp' = -Vlimit
(B) In the case of -Vlimit ≤ Vdp ≤ Vlimit, Vdp' = Vdp
(C) In the case of Vlimit < Vdp, Vdp' = Vlimit

That is, when the d-axis proportional output Vdp exceeds the upper limit value (Vlimit) or falls below the lower limit value (-Vlimit), the limiter 102d limits the value of Vdp and outputs the limited value as the limited d-axis proportional output Vdp'. Moreover, when the d-axis proportional output Vdp is greater than or equal to the lower limit value and less than or equal to the upper limit value, the limiter 102d outputs the value of Vdp as the limited d-axis proportional output Vdp' as it is. The value of the limited d-axis proportional output Vdp' output by the limiter 102d is input to the limiter 110d and the adder 111d.

The d-axis integral amplifier 103d calculates an own-axis integral input Cid by multiplying the d-axis electric current deviation ed by Kid. That is, Cid = ed×Kid. "Kid" denotes an integral gain which is multiplied in order to set the steady value of the d-axis electric current deviation ed to 0. For example, Kid = ωcc×R. Here, R denotes a winding resistance value of the rotating machine 10. However, the value of Kid is not limited to ωcc×R, and may be appropriately adjusted based on the actual measurement result or the like. The own-axis integral input Cid calculated by the d-axis integral amplifier 103d is input to the integrator 109d.

The high-pass filter 104d reduces a low-frequency component of the q-axis electric current deviation eq and outputs it to the response angular frequency amplifier 105d.

The response angular frequency amplifier 105d multiplies, by ωcc, the q-axis electric current deviation eq whose low-frequency component is reduced by the high-pass filter 104d and outputs a multiplication result to the multiplier 107d.

The inductance amplifier 106d multiplies the rotational angular velocity ω by Lq and outputs a multiplication result to the multiplier 107d. "Lq" denotes the value of the q-axis inductance of the rotating machine 10.

The multiplier 107d obtains an other-axis integral input Bid by multiplying the output of the response angular frequency amplifier 105d by the output of the inductance amplifier 106d. The multiplier 107d outputs the other-axis integral input Bid to the other-axis integral input amplifier 121d.

The other-axis integral input amplifier 121d calculates a corrected other-axis integral input Bid' by multiplying the other-axis integral input Bid by Kind. "Kind" denotes an integral input switching gain that changes based on the d-axis electric current deviation ed, and its value will be described below.

The integrator 122d inputs the corrected other-axis integral input Bid' thereinto to perform integral calculation, and outputs an integral calculation result as an other-axis integral output Vdi2.

The other-axis integral output amplifier 123d calculates a corrected other-axis integral output Vdi2' by multiplying the other-axis integral output Vdi2 by Koutd. "Koutd" denotes an integral output switching gain that changes based on the amount of change Δωabs, and its value will be described below.

The integrator 109d performs integral calculation on the d-axis integral input Cid and outputs an integral calculation result as a d-axis integral output Vdi1 to the subtractor 124d.

The subtractor 124d subtracts the d-axis integral output Vdi1 by the corrected other-axis integral output Vdi2' and outputs a subtraction result as a d-axis integral output Vdi to the limiter 110d.

The limiter 110d compares the d-axis integral output Vdi with the upper limit value (Vlimit-Vdp') and the lower limit value (-Vlimit-Vdp') and outputs a limited d-axis integral output Vdi' based on a comparison result. Specific calculations performed by the limiter 110d are as follows.

     (D) In the case of Vdi < -Vlimit-Vdp', Vdi' = -Vlimit-Vdp'
     (E) In the case of -Vlimit-Vdp' ≤ Vdi ≤ Vlimit-Vdp', Vdi' = Vdi
     (F) In the case of Vlimit-Vdp' < Vdi, Vdi' = Vlimit-Vdp'

That is, when the d-axis integral output Vdi exceeds the upper limit value (Vlimit-Vdp') or falls below the lower limit value (-Vlimit-Vdp'), the limiter 110d limits the value of Vdi and outputs the limited value as the limited d-axis integral output Vdi'. Moreover, when the d-axis integral output Vdi is greater than or equal to the lower limit value and less than or equal to the upper limit value, the limiter 110d outputs the value of Vdi as the limited d-axis integral output Vdi' as it is. The value of the limited d-axis integral output Vdi' output by the limiter 110d is input to the adder 111d.

Here, the reason why the limiter 110d makes limit determination using the limited d-axis proportional output Vdp' is to prevent excessive accumulation of the limited d-axis integral output Vdi' and to obtain the effect of anti-wind-up.

The adder 111d adds the limited d-axis proportional output Vdp' to the limited d-axis integral output Vdi' to obtain the d-axis voltage command value vd. The obtained voltage command value vd is input to the coordinate converter 25 as shown in FIG. 1.

Next, the q-axis voltage command value calculator 24q will be described with reference to FIG. 4. The q-axis voltage command value calculator 24q includes a q-axis transient amplifier 120q, a q-axis proportional amplifier 101q, a limiter 102q, a q-axis integral amplifier 103q, a high-pass filter (HPF) 104q, a response angular frequency amplifier 105q, an inductance amplifier 106q, a multiplier 107q, an integrator 109q (own-axis integrator), an integrator 122q (other-axis integrator), an other-axis integral output amplifier 123q, an adder 124q, a limiter 110q, and an adder 111q.

The q-axis transient amplifier 120q calculates a corrected q-axis electric current deviation eq' by multiplying the q-axis electric current deviation eq by Ktrq. That is, eq' = eq×Ktrq. "Ktrq" denotes a correction gain whose value changes based on the amount of change Δωabs, and details thereof will be described below.

The q-axis proportional amplifier 101q calculates a q-axis proportional output Vqp by multiplying the corrected q-axis electric current deviation eq' by Kpq. That is, Vqp = eq'×Kpq. "Kpq" denotes a q-axis proportional gain that is multiplied in order that the rotating machine electric current actually flowing with respect to the electric current command value iq_ref becomes a preferred response. For example, Kpq = ωcc×Lq. Here, as described above, ωcc denotes the response angular frequency, and Lq denotes the q-axis inductance. However, the value of Kpq is not limited to ωcc×Lq and may be appropriately adjusted by actually measuring the responsiveness of the rotating machine electric current actually flowing with respect to the electric current command value iq_ref, or the like. The q-axis proportional output Vqp calculated by the q-axis proportional amplifier 101q is input to the limiter 102q.

The limiter 102q compares the q-axis proportional output Vqp with the upper limit value (Vlimit) and the lower limit value (-Vlimit) and outputs a limited q-axis proportional output Vqp' based on a comparison result.

Specific calculations performed by the limiter 102q are as follows.

     (G) In the case of Vqp < -Vlimit, Vqp' = -Vlimit
     (H) In the case of -Vlimit ≤ Vqp ≤ Vlimit, Vqp' = Vqp
     (I) In the case of Vlimit < Vqp, Vqp' = Vlimit

That is, when the q-axis proportional output Vqp exceeds the upper limit value (Vlimit) or falls below the lower limit value (-Vlimit), the limiter 102q limits the value of Vqp and outputs the limited value as the limited q-axis proportional output Vqp'. Moreover, when the q-axis proportional output Vqp is greater than or equal to the lower limit value and less than or equal to the upper limit value, the limiter 102q outputs the value of Vqp as the limited q-axis proportional output Vqp' as it is. The value of the limited q-axis proportional output Vqp' output by the limiter 102q is input to the limiter 110q and the adder 111q.

The q-axis integral amplifier 103q calculates an own-axis integral input Ciq by multiplying the q-axis electric current deviation eq by Kiq. That is, Ciq = eq×Kiq. Here, Kiq denotes an integral gain that is multiplied in order to set the steady value of the q-axis electric current deviation eq to 0. For example, Kiq = ωcc×R. However, the value of Kiq is not limited to ωcc×R and may be adjusted appropriately based on actual measurement results or the like. The own-axis integral input Ciq calculated by the q-axis integral amplifier 103q is input to the integrator 109q.

The high-pass filter 104q reduces a low-frequency component of the d-axis electric current deviation ed and outputs it to the response angular frequency amplifier 105q.

The response angular frequency amplifier 105q multiplies, by ωcc, the d-axis electric current deviation ed whose low-frequency component is reduced by the high-pass filter 104q and outputs a multiplication result to the multiplier 107q.

The inductance amplifier 106q multiplies the rotational angular velocity ω by Ld and outputs a multiplication result to the multiplier 107q.

The multiplier 107q obtains an other-axis integral input Biq by multiplying an output of the response angular frequency amplifier 105q by an output of the inductance amplifier 106q. The multiplier 107q outputs the other-axis integral input Biq to the integrator 122q.

The integrator 122q inputs the other-axis integral input Biq thereinto to perform integral calculation and outputs an integral calculation result as an other-axis integral output Vqi2.

The other-axis integral output amplifier 123q calculates a corrected other-axis integral output Vqi2' by multiplying the other-axis integral output Vqi2 by Koutq. "Koutq" denotes an integral output switching gain whose value changes based on the amount of change Δωabs, and details thereof will be described below.

The integrator 109q performs integral calculation on a q-axis integral input Ciq and outputs an integral calculation result as a q-axis integral output Vqi1 to the adder 124q.

The adder 124q adds the q-axis integral output Vqi1 to the corrected other-axis integral output Vqi2' and outputs an addition result as a q-axis integral output Vqi.

The limiter 110q compares the q-axis integral output Vqi with the upper limit value (Vlimit-Vqp') and the lower limit value (-Vlimit-Vqp') and outputs a limited q-axis integral output Vqi' based on a comparison result. Specific calculations performed by the limiter 110q are as follows.

(J) In the case of Vqi < -Vlimit-Vqp', Vqi' = -Vlimit-Vqp'
(K) In the case of -Vlimit-Vqp' ≤ Vdi ≤ Vlimit-Vqp', Vqi' = Vqi
(L) In the case of Vlimit-Vqp' < Vqi, Vqi' = Vlimit-Vqp'

That is, when the q-axis integral output Vqi exceeds the upper limit value (Vlimit-Vqp') or falls below the lower limit value (-Vlimit-Vqp'), the limiter 110q limits the value of Vqi and outputs the limited value as the limited q-axis integral output Vqi'. Moreover, when the q-axis integral output Vqi is greater than or equal to the lower limit value and less than or equal to the upper limit value, the limiter 110q outputs the value of Vqi as the limited q-axis integral output Vqi' as it is. The value of the limited q-axis integral output Vqi' output by the limiter 110q is input to the adder 111q.

Here, the reason why the limiter 110q makes limit determination using the limited q-axis proportional output Vqp' is to prevent excessive accumulation of the limited q-axis integral output Vqi' and to obtain the effect of anti-wind-up.

The adder 111q obtains the q-axis voltage command value vq by adding the limited q-axis proportional output Vqp' to the limited q-axis integral output Vqi'. The obtained voltage command value vq is input to the coordinate converter 25.

As shown in FIG. 1, the voltage command values vd and vq on the two rotational axes (d- and q-axes) and the rotor position θ are input to the coordinate converter 25. The coordinate converter 25 performs coordinate conversion for the voltage command values vd and vq based on the rotor position θ and calculates the voltage command values vu, vv, and vw on the three-phase coordinates.

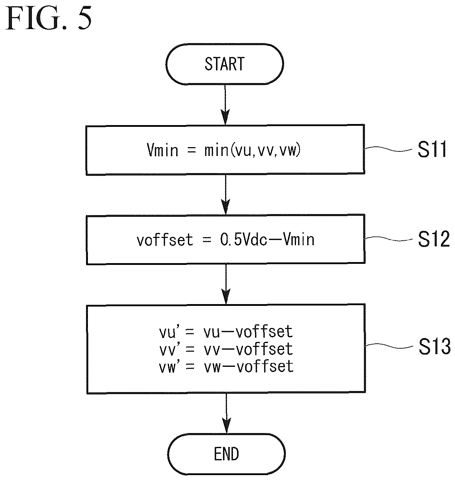

The corrected voltage generator 26 generates the corrected voltage command values vu', vv', and vw' based on the voltage command values vu, vv, and vw output from the coordinate converter 25 and an offset voltage voffset. FIG. 5 is a flowchart showing a process performed by the corrected voltage generator 26 in Embodiment 1.

When the process of the flowchart shown in FIG. 5 is started, step S11 is first executed. In step S11, the corrected voltage generator 26 selects a smallest value from the voltage command values vu, vv, and vw and sets the selected value as Vmin.

Subsequently, in step S12, the corrected voltage generator 26 sets the value of the offset voltage voffset to 0.5 Vdc-Vmin.

Subsequently, in step S13, the corrected voltage generator 26 obtains the corrected voltage command values vu', vv', and vw' by subtracting the offset voltage voffset from the voltage command values vu, vv, and vw, respectively.

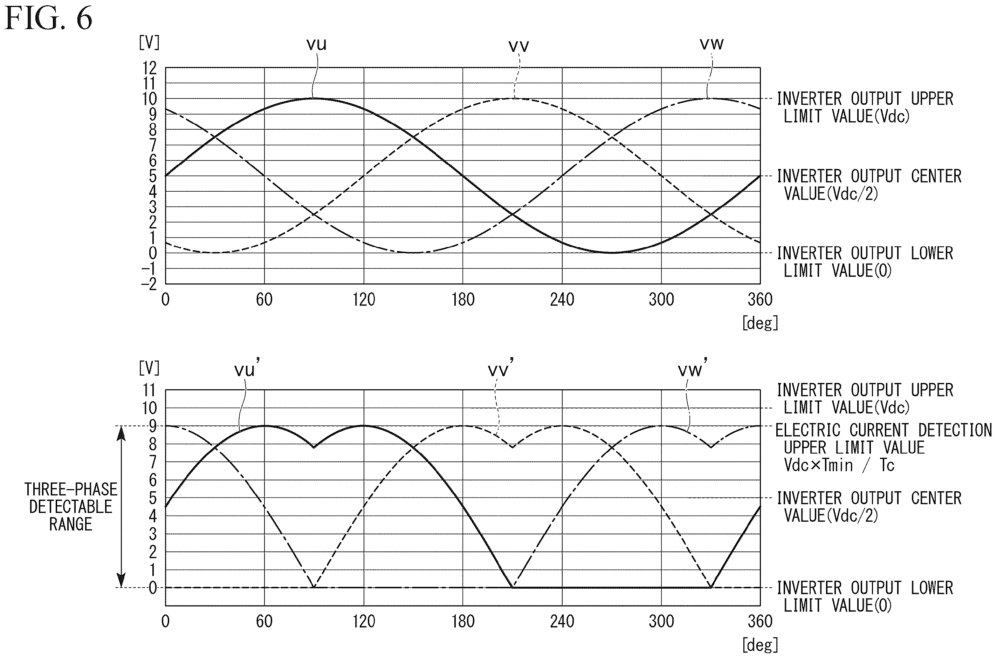

FIG. 6 is a diagram showing an example of waveforms of the voltage command values vu, vv, and vw and the corrected voltage command values vu', vv', and vw' in Embodiment 1. Furthermore, in FIG. 6, the waveform graph of the voltage command values vu, vv, and vw is shown on the upper side, and the waveform graph of the corrected voltage command values vu', vv', and vw' is shown on the lower side. In each graph shown in FIG. 6, the DC bus voltage Vdc = 10 V. Here, the range of a voltage capable of being output by the inverter 12 is 0 (a minimum value of the carrier triangle wave C) to Vdc (a maximum value of the carrier triangle wave C). For this reason, when the DC bus voltage Vdc = 10 V, the range of a voltage capable of being output by the inverter 12 is 0 V to 10 V as shown in FIG. 6.

When a process of steps S11 to S13 shown in FIG. 5 is performed, the minimum values of the corrected voltage command values vu', vv', and vw' always matches the lower limit value of the output of the inverter as shown in the lower graph of FIG. 6. This means that the corrected voltage command values vu', vv', and vw' are offset to the lower side as equally as possible in three phases within a range in which the voltage is not saturated and the ON-time of the lower arm-switching elements Sun, Svn, and Swn increases as much as possible. This point is advantageous from the viewpoint of electric current detection in an inverter including the shunt resistors Ru, Rv, and Rw in series with respect to the lower arm-switching elements Sun, Svn, and Swn, as in the present embodiment.

Furthermore, a method of calculating the offset voltage voffset is not limited to the above-described method. For example, in step S11 of FIG. 5, in addition to a process of selecting a smallest value from the voltage command values vu, vv, and vw and setting the selected value to Vmin, a process in which a largest value is selected from the voltage command values vu, vv, and vw and is set to Vmax may be performed. Also, in step S12, a process of setting voffset to "(Vmax+Vmin)/2" may be performed. Thus, a method of making voffset = (Vmax+Vmin)/2 is referred to as third-harmonic addition or HIP modulation. Moreover, the upper arm-switching element corresponding to the phase having the highest voltage command value among the three phases may always be in an ON state, and so-called two-phase modulation may be adopted.

The corrected voltage command values vu', vv', and vw' generated by the corrected voltage generator 26 according to the above calculation are input to the PWM signal generator 27. Then, the PWM signal generator 27 performs PWM modulation for the corrected voltage command values vu', vv', and vw' and outputs PWM modulation results as the switching signals Gup to Gwn to the inverter 12.

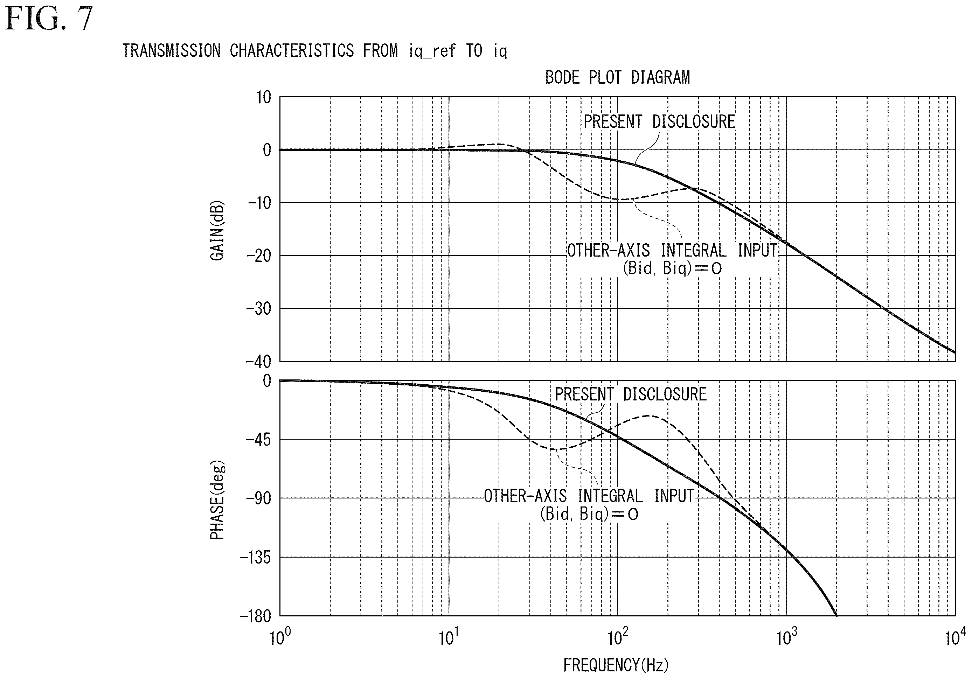

FIG. 7 is a Bode plot diagram showing transmission characteristics from the q-axis electric current command value iq_ref to the detected q-axis electric current value iq when the rotational angular velocity ω is high in the control device 1 according to Embodiment 1. In FIG. 7, a gain diagram is shown on the upper side and a phase diagram is shown on the lower side. In both the gain diagram and the phase diagram, the "present disclosure" indicates the transmission characteristics according to Embodiment 1, and the "other-axis integral input (Bid, Biq) = 0" indicates characteristics of a case where 0 (zero) is forcibly input as values of Bid and Biq (see FIGS. 3 and 4).

As shown in the gain diagram of FIG. 7, there is a drop in the gain in the vicinity of 100 Hz in "other-axis integral input (Bid, Biq) = 0." In contrast, in the "present disclosure," there is no drop in the vicinity of 100 Hz, and the transmission characteristics of an ideal first order delay system are obtained. That is, the control device 1 according to the present disclosure can obtain a suitable control result even if the rotational angular velocity ω is high.

As shown in FIG. 1, the rotational angular velocity ω is input to the absolute value calculator 31. The absolute value calculator 31 calculates a rotational angular velocity absolute value ωabs based on the rotational angular velocity ω and outputs a calculation result to the change amount calculator 30.

The change amount calculator 30 calculates the amount of change Δωabs in the absolute value of the angular velocity based on the rotational angular velocity absolute value ωabs. As a method for calculating the amount of change Δωabs, for example, a high-pass filter may be applied to the rotational angular velocity absolute value ωabs. Alternatively, the amount of change Δωabs may be calculated by taking a difference between the current value and the previous value of the rotational angular velocity absolute value ωabs.

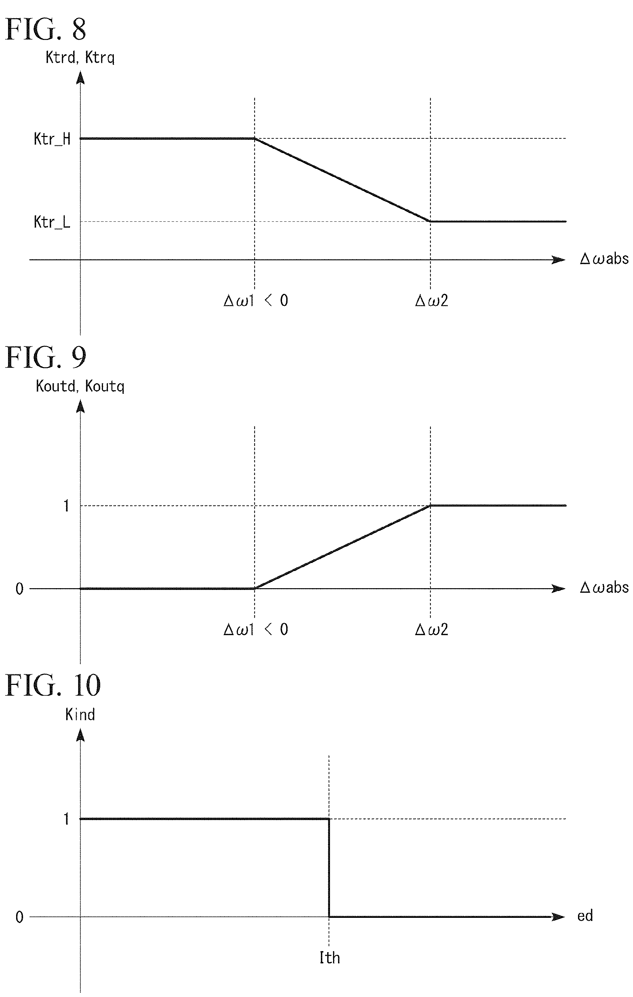

The d-axis transient amplifier 120d and the q-axis transient amplifier 120q of the voltage command value calculation unit 24 change the values of the correction gains Ktrd and Ktrq in accordance with the amount of change Δωabs in the absolute value of the angular velocity as shown in FIG. 8. Each of the correction gains Ktrd and Ktrq is switched between a first correction value Ktr_H and a second correction value Ktr_L. The second correction value Ktr_L is less than the first correction value Ktr_H. In FIG. 8, Δω1 denotes a first threshold value of the amount of change in the angular velocity and Δω2 denotes a second threshold value of the amount of change in the angular velocity. The first threshold value Δω1 of the amount of change in the angular velocity is less than 0. The second threshold value Δω2 of the amount of change in the angular velocity is greater than the first threshold value Δω1 of the amount of change in the angular velocity.

When Δωabs is greater than or equal to Δω2, the correction gains Ktrd and Ktrq are set to the second correction value Ktr_L. When the correction gains Ktrd and Ktrq are set to a low value (Ktr_L), the effect of noise contained in the detected electric current values id and iq is reduced. When Δωabs is less than or equal to Δω1, it means that the rotational angular velocity ω has rapidly decreased, so that the correction gains Ktrd and Ktrq are set to a high value (Ktr_H). Moreover, when Δωabs is in the range of Δω1 to Δω2, the values of the correction gains Ktrd and Ktrq are continuously switched along a slope in the range of Ktr_H to Ktr_L. Thereby, the shock when the set values of the correction gain Ktrd and Ktrq are switched can be reduced. However, the above-described slope may not be provided, or Δω1 = Δω2 may be set.

Increasing the values of the correction gains Ktrd and Ktrq to be greater than 1 is equivalent to increasing the values of the proportional gains Kpd and Kpq. For example, it is only necessary to set Ktr_L to 1 and set Ktr_H to a value greater than 1.

Also, in the example of FIG. 8, an equal set value is used for the d-axis correction gain Ktrd and the q-axis correction gain Ktrq. However, the set values may be different for the d-axis correction gain Ktrd and the q-axis correction gain Ktrq. Specifically, one or more of Ktr_H, Ktr_L, Δω1, and Δω2 may be set to different values between the d-axis and the q-axis.

Thus, the voltage command value calculation unit 24 in Embodiment 1 sets the correction gains Ktrd and Ktrq to high values (Ktr_H) when the rotational angular velocity ω has rapidly decreased, so it is possible to rapidly decrease the output voltage of the inverter 12.

Moreover, the other-axis integral output amplifiers 123d and 123q of the voltage command value calculation unit 24 change the values of the integral output switching gains Koutd and Koutq in accordance with the value of Δωabs calculated by the change amount calculator 30 as shown in FIG. 9. When Δωabs is greater than or equal to Δω2, the values of Koutd and Koutq are set to 1, and interference compensation is made valid. When Δωabs is less than or equal to Δω1, it means that the rotational angular velocity ω has rapidly decreased, and therefore the values of Koutd and Koutq are set to 0, and interference compensation is made invalid. When Δωabs is in the range of Δω1 to Δω2, the values of Koutd and Koutq are continuously switched along a slope in the range of 0 to 1. Thereby, the shock when the set values of Koutd and Koutq are switched can be reduced. However, no slope may be provided, or Δω1 = Δω2 may be set.

Thus, the voltage command value calculation unit 24 in Embodiment 1 sets the interference compensation term to zero (i.e., the interference compensation is made invalid) when the rotational angular velocity ω has rapidly decreased, so it is possible to rapidly decrease the output voltage of the inverter 12.

As shown in FIG. 10, the other-axis integral input amplifier 121d of the voltage command value calculation unit 24 in Embodiment 1 changes the value of the integral input switching gain Kind in accordance with the d-axis electric current deviation ed. When the d-axis electric current deviation ed is less than or equal to a threshold value Ith, the value of Kind is set to 1, and integral calculation for interference compensation is performed in the integrator 122d. When the d-axis electric current deviation ed is greater than the threshold value Ith, it means that the negative d-axis electric current is flowing sufficiently. Therefore, the value of Kind is set to 0, and the integral for the interference compensation in the integrator 122d is substantially stopped. Kind is multiplied by a value to be input to the integrator 122d, so shock is unlikely to occur even if no slope is provided for shock reduction associated with switching of the set value of Kind. For this reason, no slope is provided in the present embodiment. However, a slope may be provided such that the value of Kind gradually changes between 0 and 1.

The threshold value Ith is a value greater than or equal to 0. A specific value of the threshold value Ith is, for example, a value greater than the amplitude of the vibration of the d-axis electric current to be generated when the q-axis electric current command value iq_ref is changed to a sinusoidal wave having the assumed maximum amplitude. The value of the threshold value Ith may be 0, and in this case, the best effect of suppressing excessive integral is obtained.

Thus, the voltage command value calculation unit 24 in Embodiment 1 stops the integral of interference compensation when the d-axis electric current deviation ed is greater than the threshold value Ith. According to this configuration, it is possible to suppress an excessive increase in the output voltage of the inverter 12 when the rotational angular velocity ω has rapidly decreased.

First Modification of Embodiment 1

In Embodiment 1, a process of suppressing an overcurrent state caused by a rapid decrease in the rotational angular velocity ω of the AC rotating machine 10 has been taken into account. Here, if the rotating machine electric currents iu, iv, and iw of the AC rotating machine 10 have rapidly increased or if the electric current command values id_ref and iq_ref have rapidly decreased, a similar overcurrent state may also be caused. Therefore, in the first modification, control when the rotating machine electric currents iu, iv, and iw have rapidly increased or when the electric current command values id_ref and iq_ref have rapidly decreased will be described.

Hereinafter, description of parts equivalent to those of Embodiment 1 will be omitted, and differences therebetween will be mainly described.

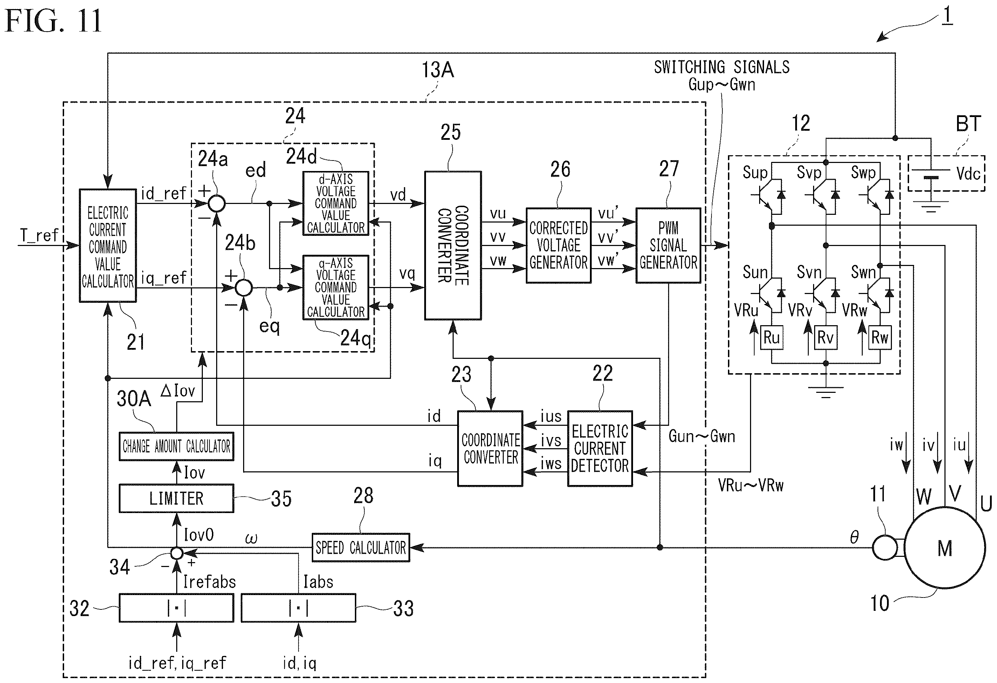

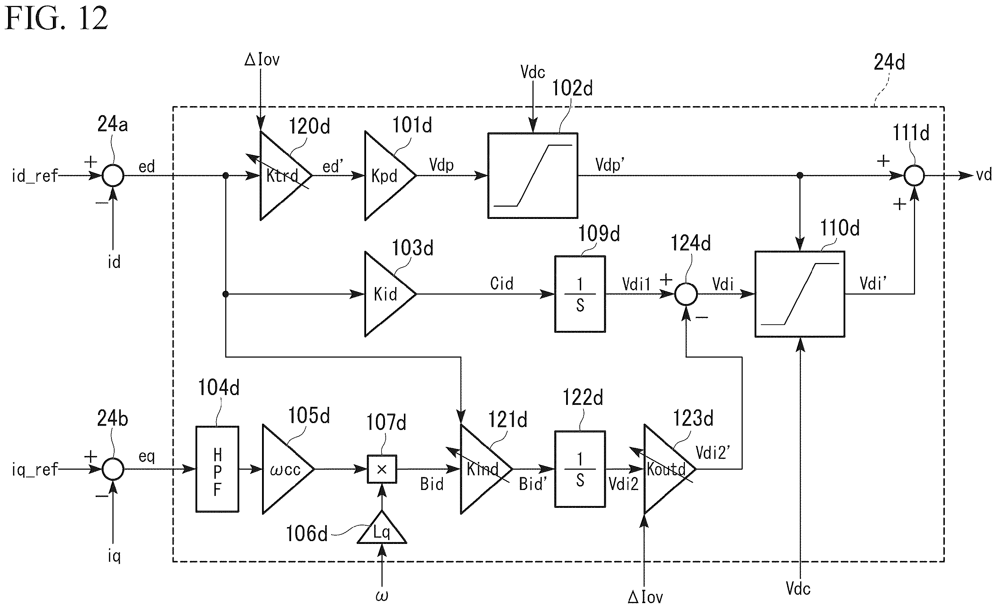

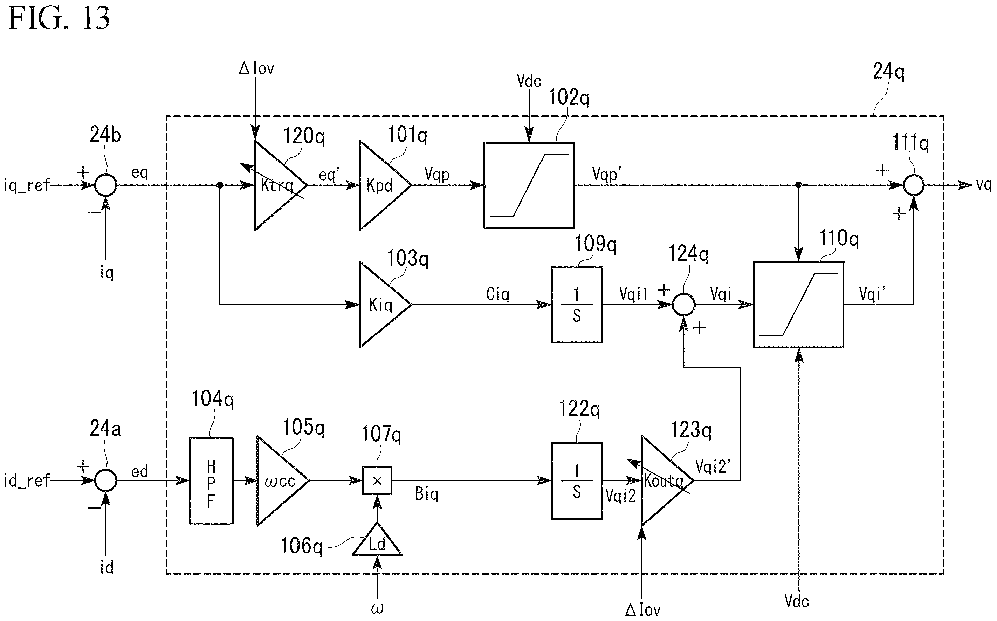

As shown in FIG. 11, a control device 1 according to the first modification includes a controller 13A. A configuration of the controller 13A is different from the controller 13 according to Embodiment 1 in that the controller 13A includes a change amount calculator 30A instead of the change amount calculator 30 and includes an absolute value calculator 32, an absolute value calculator 33, a subtractor 34, and a limiter 35 instead of the absolute value calculator 31. Moreover, as shown in FIGS. 12 and 13, the process in the d-axis voltage command value calculator 24d and the q-axis voltage command value calculator 24q is different from the process according to Embodiment 1 (FIGS. 3 and 4).

In FIG. 11, the absolute value calculator 32 calculates an electric current command absolute value Irefabs based on electric current command values id_ref and iq_ref of the d-axis and the q-axis. Specific calculation performed by the absolute value calculator 32 is as follows.

$$\text{Irefabs} = \sqrt{(\text{id\_ref}^2 + \text{iq\_ref}^2)}$$

The absolute value calculator 33 calculates an electric current absolute value Iabs based on the detected electric current values id and iq of the d-axis and the q-axis. Specific calculation performed by the absolute value calculator 33 is as follows.

$$\text{Iabs} = \sqrt{(\text{id}^2 + \text{iq}^2)}$$

Also, instead of the detected electric current values id and iq, the electric current absolute value Iabs may be calculated using the pre-conversion detected electric currents ius, ivs, and iws.

The subtractor 34 subtracts the electric current command absolute value Irefabs from the electric current absolute value Iabs to calculate an overcurrent amount Iov0. That is, Iov0 = Iabs-Irefabs.

The limiter 35 limits a lower limit of the overcurrent amount Iov0 at 0 (zero) and calculates a limited overcurrent amount Iov. That is, the limiter 35 sets Iov = Iov0 when the value of the overcurrent amount Iov0 is zero or more and sets Iov = 0 when the value of the overcurrent amount Iov0 is less than zero. According to the process of this limiter 35, the limited overcurrent amount Iov changes only when the electric current absolute value Iabs is greater than the electric current command absolute value Irefabs.

The change amount calculator 30A calculates an amount of change ΔIov in the overcurrent amount based on the limited overcurrent amount Iov. The amount of change ΔIov in the overcurrent amount can be calculated, for example, by applying a high-pass filter to the limited overcurrent amount Iov. Moreover, ΔIov may be calculated by taking a difference between the current value and the previous value in the limited overcurrent amount Iov. The amount of change ΔIov in the overcurrent amount is calculated based on a result of subtracting the electric current command absolute value Irefabs from the electric current absolute value Iabs. For this reason, when the electric current absolute value Iabs has rapidly increased or when the electric current command absolute value Irefabs has rapidly decreased, the amount of change ΔIov in the overcurrent amount increases.

As shown in FIG. 12, in the d-axis voltage command value calculator 24d according to the first modification, the d-axis transient amplifier 120d multiplies the d-axis electric current deviation ed by Ktrd to calculate the corrected d-axis electric current deviation ed'. The correction gain Ktrd in the first modification is a value that changes based on the amount of change ΔIov in the overcurrent amount, and details thereof will be described below.

The other-axis integral output amplifier 123d according to the first modification calculates the corrected other-axis integral output Vdi2' by multiplying the other-axis integral output Vdi2 by Koutd. The value of the integral output switching gain Koutd in the first modification changes based on the amount of change ΔIov in the overcurrent amount.

The other calculations in the d-axis voltage command value calculator 24d are similar to those in Embodiment 1.

As shown in FIG. 13, in the q-axis voltage command value calculator 24q according to the first modification, the q-axis transient amplifier 120q calculates a corrected q-axis electric current deviation eq' by multiplying the q-axis electric current deviation eq by Ktrq. The value of the correction gain Ktrq in the first modification changes based on the amount of change ΔIov in the overcurrent amount.

The other-axis integral output amplifier 123q according to the first modification calculates a corrected other-axis integral output Vqi2' by multiplying the other-axis integral output Vqi2 by Koutq. The value of the integral output switching gain Koutq in the first modification changes based on the amount of change ΔIov in the overcurrent amount.

The other calculations in the q-axis voltage command value calculator 24q are similar to those in Embodiment 1.

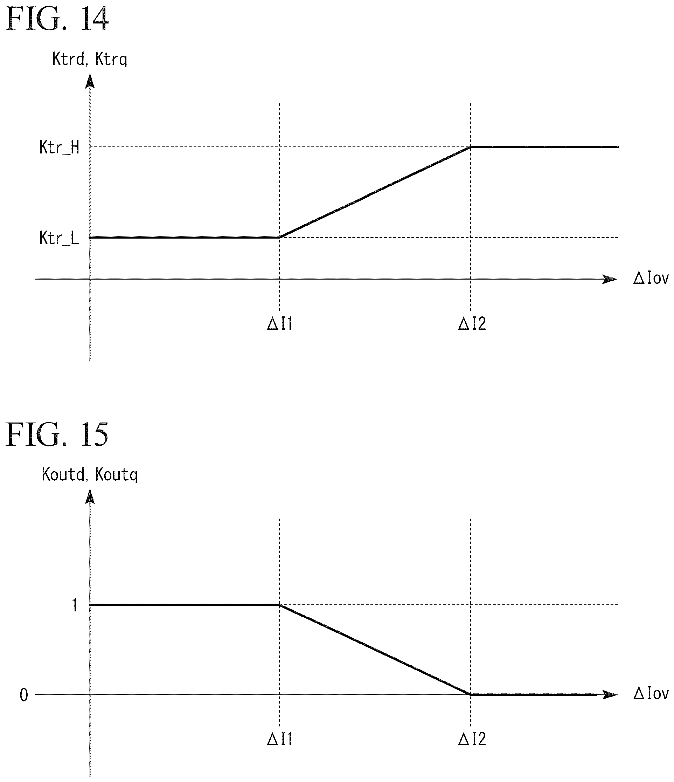

In the first modification, the d-axis transient amplifier 120d and the q-axis transient amplifier 120q change the correction gains Ktrd and Ktrq of the d- and q-axes as shown in FIG. 14 in accordance with the amount of change ΔIov in the overcurrent amount calculated by the change amount calculator 30A. In FIG. 14, "ΔI1" denotes a first threshold value of the amount of change in the overcurrent, and "ΔI2" denotes a second threshold value of the amount of change in the overcurrent. The first threshold value ΔI1 of the amount of change in the overcurrent is less than the second threshold value ΔI2 of the amount of change in the overcurrent.

As shown in FIG. 14, when ΔIov is less than or equal to ΔI1, the effect of noise contained in the detected electric current values id and iq is reduced by setting the correction gains Ktrd and Ktrq to a low value Ktr_L. When ΔIov is greater than or equal to ΔI2, it means that the rotating machine electric currents iu, iv, and iw have rapidly increased or that the electric current command values id_ref and iq_ref have rapidly decreased. Therefore, in this case, the correction gains Ktrd and Ktrq are increased to a high value Ktr_H. Moreover, when ΔIov is in the range of ΔI1 to ΔI2, the values of the correction gains Ktrd and Ktrq are continuously switched along a slope in the range of Ktr_H to Ktr_L. Thereby, the shock when the set values of the correction gains Ktrd and Ktrq are switched can be reduced. However, no slope may be provided, and ΔI1 = ΔI2 may be set.

Also, in the example of FIG. 14, an equal set value is used for the correction gain Ktrd of the d-axis and the correction gain Ktrq of the q-axis. However, the set values may be different for the correction gain Ktrd of the d-axis and the correction gain Ktrq of the q-axis. Specifically, one or more of Ktr_H, Ktr_L, ΔI1, and ΔI2 may be set to different values between the d-axis and the q-axis.

Thus, the voltage command value calculation unit 24 in the first modification sets the correction gains Ktrd and Ktrq to a high value (Ktr_H) when the rotating machine electric currents iu, iv, and iw have rapidly increased, so it is possible to rapidly decrease the output voltage of the inverter 12.

Moreover, the other-axis integral output amplifiers 123d and 123q of the d-axis and the q-axis in the first modification change the values of the integral output switching gains Koutd and Koutq as shown in FIG. 15 in accordance with the value of ΔIov calculated by the change amount calculator 30A. When ΔIov is less than or equal to ΔI1, the values of Koutd and Koutq are set to 1, and interference compensation is made valid. When ΔIov is greater than or equal to ΔI2, it means that the rotating machine electric currents iu, iv, and iw have rapidly increased with respect to the target value or that the electric current command values id_ref and iq_ref have rapidly decreased. Therefore, in this case, the values of Koutd and Koutq are set to 0, and the interference compensation is made invalid. When ΔIov is in the range of ΔI1 to ΔI2, the values of Koutd and Koutq are continuously switched along a slope in the range of 0 to 1. Thereby, the effect of the shock when the set values of Koutd and Koutq are switched can be reduced. However, no slope may be provided, or ΔI1 = ΔI2 may be set.

Thus, the voltage command value calculation unit 24 in the first modification sets the interference compensation term to zero (i.e., the interference compensation is made invalid) when the rotating machine electric currents iu, iv, and iw have rapidly increased with respect to the target value, so it is possible to rapidly decrease the output voltage of the inverter 12.

Second Modification of Embodiment 1

In Embodiment 1 and the first modification thereof, a case where internal factors (the rotational angular velocity ω, the rotating machine electric currents iu, iv, and iw, and the like) of the rotating machine 10 rapidly change has been considered. Here, if an external factor of the rotating machine 10 rapidly changes, a similar overcurrent state may also be caused. Therefore, in the second modification, as an example of the external factor of the AC rotating machine, control when the DC bus voltage Vdc rapidly changes will be described. For example, when the DC bus voltage Vdc has rapidly increased, the output voltage of the inverter 12 becomes excessive even if there is no change in the corrected voltage commands vu', vv', and vw', so an overcurrent state may occur.

Hereinafter, description of parts equivalent to those of Embodiment 1 will be omitted and differences will be mainly described.

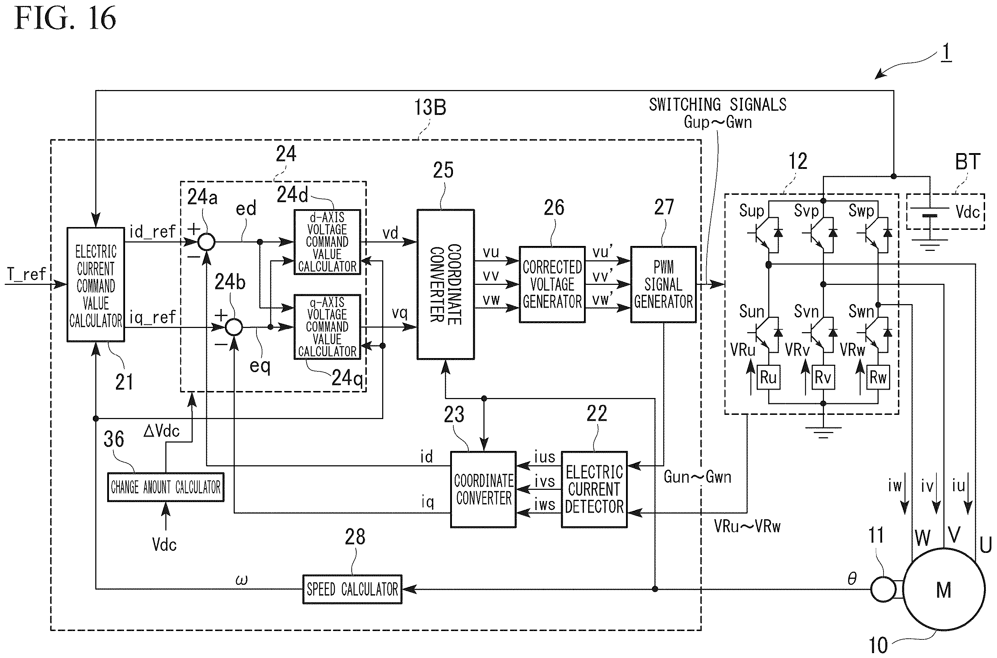

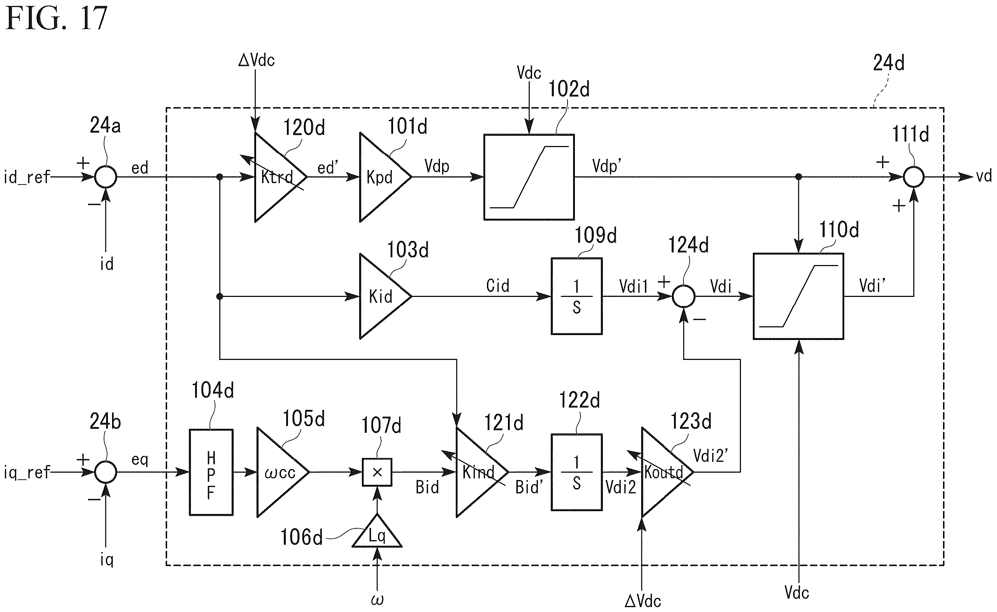

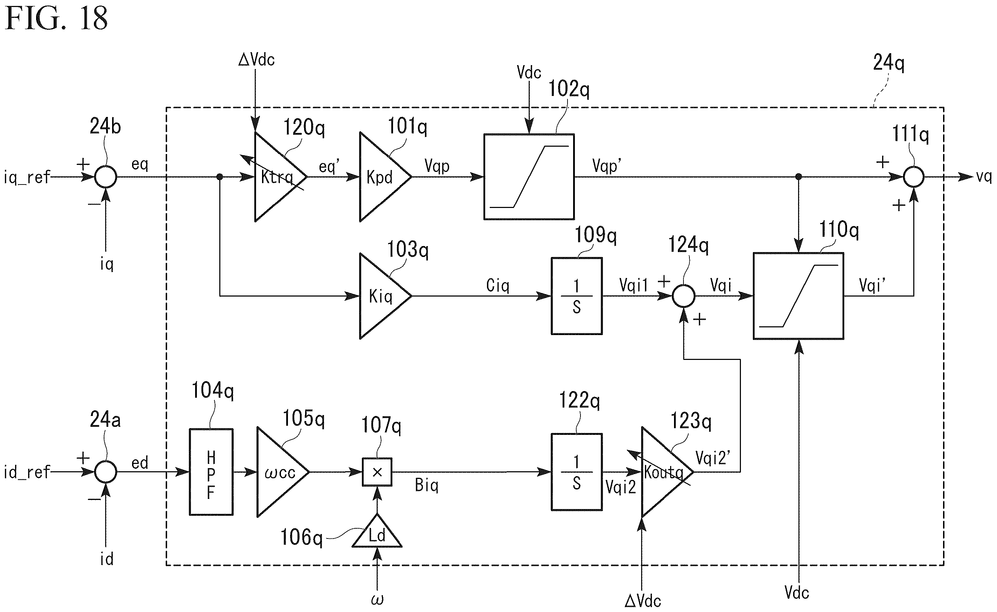

As shown in FIG. 16, the control device 1 according to the second modification includes a controller 13B. The configuration of the controller 13B is different from the controller 13 according to Embodiment 1 in that the controller 13B includes a change amount calculator 36 instead of the absolute value calculator 31 and the change amount calculator 30. Moreover, as shown in FIGS. 17 and 18, processes in the d-axis voltage command value calculator 24d and the q-axis voltage command value calculator 24q are different from the processes according to Embodiment 1 (FIGS. 3 and 4).

In FIG. 16, the change amount calculator 36 calculates an amount of change ΔVdc in the DC bus voltage based on the DC bus voltage Vdc. The amount of change ΔVdc in the DC bus voltage can be calculated, for example, by applying a high-pass filter to the DC bus voltage Vdc. Moreover, ΔVdc may be calculated by taking a difference between the current value and the previous value in the DC bus voltage Vdc.

As shown in FIG. 17, in the d-axis voltage command value calculator 24d according to the second modification, the d-axis transient amplifier 120d calculates the corrected d-axis electric current deviation ed' by multiplying the d-axis electric current deviation ed by Ktrd. The correction gain Ktrd in the second modification is a value that changes based on the amount of change ΔVdc in the DC bus voltage, and details thereof will be described below.

In the other-axis integral output amplifier 123d according to the second modification, the other-axis integral output Vdi2 is multiplied by Koutd to calculate the corrected other-axis integral output Vdi2'. The value of the integral output switching gain Koutd according to the second modification changes based on the amount of change ΔVdc in the DC bus voltage.

The other calculations in the d-axis voltage command value calculator 24d are similar to those in Embodiment 1.

As shown in FIG. 18, in the q-axis voltage command value calculator 24q according to the second modification, the q-axis transient amplifier 120q calculates a corrected q-axis electric current deviation eq' by multiplying the q-axis electric current deviation eq by Ktrq. The correction gain Ktrq in the second modification is a value that changes based on the amount of change ΔVdc in the DC bus voltage, and details thereof will be described below.

The other-axis integral output amplifier 123q according to the second modification calculates the corrected other-axis integral output Vqi2' by multiplying the other-axis integral output Vqi2 by Koutq. The value of the integral output switching gain Koutq in the second modification changes based on the amount of change ΔVdc in the DC bus voltage.

The other calculations in the q-axis voltage command value calculator 24q are similar to those in Embodiment 1.

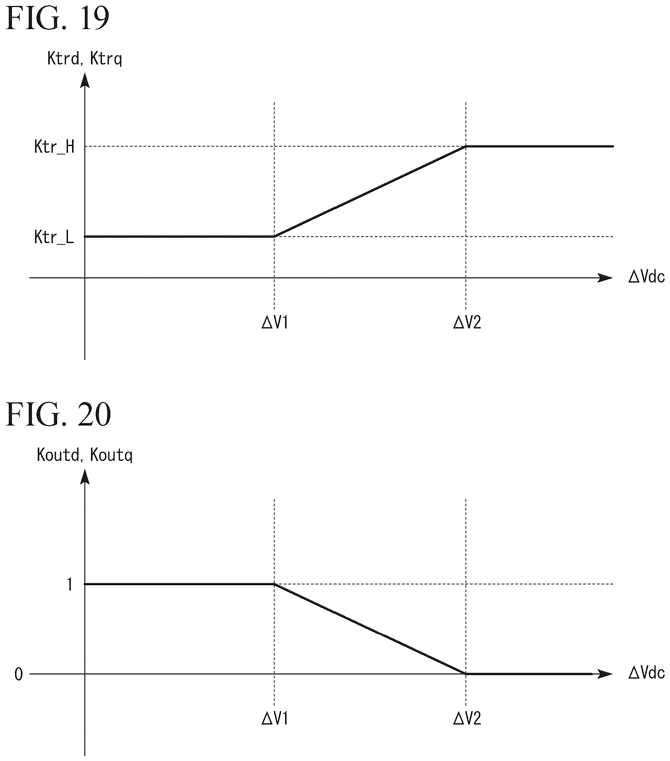

In the second modification, the d-axis transient amplifier 120d and the q-axis transient amplifier 120q change the correction gains Ktrd and Ktrq of the d-axis and the q-axis as shown in FIG. 19 in accordance with the amount of change ΔVdc in the DC bus voltage calculated by the change amount calculator 36. In FIG. 19, "ΔV1" denotes a first threshold value of an amount of voltage change, and "ΔV2" denotes a second threshold value of an amount of voltage change. The first threshold value ΔV1 of the amount of voltage change is less than the second threshold value ΔV2 of the amount of voltage change.

As shown in FIG. 19, when ΔVdc is less than or equal to ΔV1, the effect of noise contained in the detected electric current values id and iq can be reduced by setting the correction gains Ktrd and Ktrq to a low value Ktr_L. When ΔVdc is greater than or equal to ΔV2, it means that the DC bus voltage Vdc has rapidly increased, and therefore Ktrd and Ktrq are increased to a high value (Ktr_H). Moreover, when ΔVdc is in the range of ΔV1 to ΔV2, the values of the correction gains Ktrd and Ktrq are continuously switched along a slope in the range of Ktr_H to Ktr_L. Thereby, the shock when the set values of the correction gain Ktrd and Ktrq are switched can be reduced. However, no slope may be provided, or ΔV1 = ΔV2 may be set.

Also, in the example of FIG. 19, the correction gain Ktrd of the d-axis and the correction gain Ktrq of the q-axis have an equal set value. However, the correction gain Ktrd of the d-axis and the correction gain Ktrq of the q-axis may have different set values. Specifically, one or more of Ktr_H, Ktr_L, ΔV1, and ΔV2 may be set to different values between the d-axis and the q-axis.

Thus, the voltage command value calculation unit 24 in the second modification sets the correction gains Ktrd and Ktrq to a high value (Ktr_H) when the DC bus voltage Vdc has rapidly increased, so it is possible to rapidly decrease the output voltage of the inverter 12.

Moreover, the other-axis integral output amplifiers 123d and 123q of the d- and q-axes in the second modification change the values of the integral output switching gains Koutd and Koutq as shown in FIG. 20 in accordance with the value of ΔVdc calculated by the change amount calculator 36. When ΔVdc is less than or equal to ΔV1, the values of Koutd and Koutq are set to 1, and interference compensation is made valid. When ΔVdc is greater than or equal to ΔV2, it means that the DC bus voltage Vdc has rapidly increased, and therefore the values of Koutd and Koutq are set to 0, and the interference compensation is made invalid. When ΔVdc is in the range of ΔV1 to ΔV2, the values of Koutd and Koutq are continuously switched along a slope in the range of 0 to 1. Thereby, the effect of the shock when the set values of Koutd and Koutq are switched can be reduced. However, no slope may be provided, or ΔV1 = ΔV2 may be set.

Thus, the voltage command value calculation unit 24 in the second modification sets the interference compensation term to zero (i.e., the interference compensation is made invalid by setting the integral output switching gains Koutd and Koutq to 0) when the DC bus voltage Vdc has rapidly increased, so it is possible to rapidly decrease the output voltage of the inverter 12.

Also, in the second modification, a change in the DC bus voltage Vdc has been described as an example of the external factor of the AC rotating machine 10. However, control may be performed by applying the above description to other external factors (for example, a change in the load torque of the rotating machine 10 or the like).

As described above, the control device 1 according to Embodiment 1, the first modification, and the second modification includes the inverter 12 configured to apply a voltage to the AC rotating machine 10, the DC power supply BT configured to supply DC power to the inverter 12, and the electric current detector 22 configured to detect the rotating machine electric currents iu, iv, and iw flowing through the rotating machine 10, the d-axis voltage command value calculator 24d (first axis voltage command value calculator) configured to calculate the voltage command value vd of the d-axis (first axis) of the two rotational axes of the rotating machine 10, and the q-axis voltage command value calculator 24q (second axis voltage command value calculator) configured to calculate the voltage command value vq of the q-axis (second axis) of the two rotational axes. The d-axis voltage command value calculator 24d calculates the voltage command value vd of the d-axis based on the corrected d-axis electric current deviation ed' (corrected first deviation) obtained by multiplexing, by the correction gain Ktrd, the d-axis electric current deviation ed (first deviation) that is a deviation between the electric current command value id_ref of the d-axis and the detected electric current value id of the d-axis, the q-axis electric current deviation eq (second deviation) that is a deviation between the electric current command value iq_ref of the q-axis and the detected electric current value iq of the q-axis, and the rotational angular velocity ω of the AC rotating machine 10. Also, the set value of the correction gain Ktrd increases when the physical quantity in the AC rotating machine 10 has rapidly changed or when the DC bus voltage Vdc (output voltage) in the DC power supply BT has increased and is set to the first correction value Ktr_H. Moreover, the correction gain Ktrq of the q-axis may be set in a similar way.

The values of the correction gains Ktrd and Ktrq are set in this way, and thereby the output voltage of the inverter 12 can be rapidly decreased in a transient state (for example, when the rotational angular velocity ω has rapidly decreased, when the rotating machine electric currents iu, iv, and iw have rapidly increased, when the DC bus voltage Vdc has rapidly increased, or the like). Therefore, the overcurrent state of the rotating machine 10 can be appropriately suppressed. Moreover, by increasing the correction gain Ktrd only in the transient state, in other words, by setting the correction gains Ktrd and Ktrq to a low value (the second correction value Ktr_L) during the normal operation, it is possible to suppress the deterioration of motor drive sound and torque ripple due to the influence of noise contained in detection results of the rotating machine electric currents iu, iv, and iw.

Moreover, the voltage command value calculators 24d and 24q may set the correction gains Ktrd and Ktrq to the first correction value Ktr_H and may set the interference compensation term to 0 when the physical quantity of the AC rotating machine 10 has rapidly changed or when the amount of change in the output voltage ΔVdc has increased. More specifically, the values of Koutd and Koutq may be set to 0, and interference compensation may be made invalid. According to this configuration, it is possible to further reduce the amount of overcurrent applied to the AC rotating machine 10 in the transient state.

Moreover, the d-axis voltage command value calculator 24d may perform integral calculation using a value obtained by multiplying the q-axis electric current deviation eq by the rotational angular velocity ω of the AC rotating machine, the q-axis inductance Lq, and the response angular frequency ωcc for adjusting the frequency response of the rotating machine electric current with respect to the electric current command value, and may calculate the interference compensation term based on an integral calculation result. Thereby, the desired frequency response can be obtained without depending on the rotational angular velocity ω of the rotating machine. Likewise, the q-axis voltage command value calculator 24q may perform integral calculation using a value obtained by multiplying the d-axis electric current deviation ed by the rotational angular velocity ω of the AC rotating machine, the inductance Ld in the d-axis, and the response angular frequency ωcc for adjusting the frequency response of the rotating machine electric current with respect to the electric current command value, and may calculate the interference compensation term based on an integral calculation result.

Moreover, the d-axis voltage command value calculator 24d may set the input value for the integral calculation for calculating the interference compensation term to zero when the d-axis electric current deviation ed is greater than the threshold value Ith. More specifically, as shown in FIG. 10, the value of the integral input switching gain Kind may be set to 0. According to this configuration, it is possible to suppress an excessive increase in the output voltage of the inverter 12 when the rotational angular velocity ω has rapidly decreased.

Moreover, the above-described physical quantity may be the rotational angular velocity ω of the AC rotating machine 10, and the voltage command value calculators 24d and 24q may increase the set values of the correction gains Ktrd and Ktrq to the first correction value Ktr_H when the rotational angular velocity ω has rapidly decreased. According to this configuration, when the rotational angular velocity ω has rapidly decreased, the output voltage of the inverter 12 can be rapidly reduced, and the overcurrent state of the rotating machine 10 can be appropriately suppressed.

Moreover, the physical quantities may be the rotating machine electric currents iu, iv, and iw, and the voltage command value calculators 24d and 24q may increase the set values of the correction gains Ktrd and Ktrq to the first correction value Ktr_H when the rotating machine electric currents iu, iv, and iw have rapidly increased with respect to a target value. According to this configuration, when the rotating machine electric currents iu, iv, and iw have rapidly increased, the output voltage of the inverter 12 can be rapidly reduced, and the overcurrent state of the rotating machine 10 can be appropriately suppressed.

Moreover, the physical quantities may be the electric current command values id_ref and iq_ref, and the voltage command value calculators 24d and 24q may increase the set values of the correction gains Ktrd and Ktrq to the first correction value Ktr_H when the electric current command values id_ref and iq_ref have rapidly decreased. According to this configuration, when the electric current command values id_ref and iq_ref have rapidly decreased, the output voltage of the inverter 12 can be rapidly reduced, and the overcurrent state of the rotating machine 10 can be appropriately suppressed.

Moreover, the physical quantity may be an external factor (for example, load torque) of the AC rotating machine 10 other than the DC bus voltage Vdc, and the voltage command value calculators 24d and 24q may increase the set values of the correction gains Ktrd and Ktrq to the first correction value Ktr_H when the external factor has rapidly changed. According to this configuration, when an external factor has rapidly changed, the output voltage of the inverter 12 can be rapidly reduced, and the overcurrent state of the rotating machine 10 can be appropriately suppressed.

Embodiment 2

Next, Embodiment 2 in the present disclosure will be described, but a basic configuration thereof is similar to that of Embodiment 1. For this reason, description of parts equivalent to those of Embodiment 1 will be omitted, and differences will be mainly described.

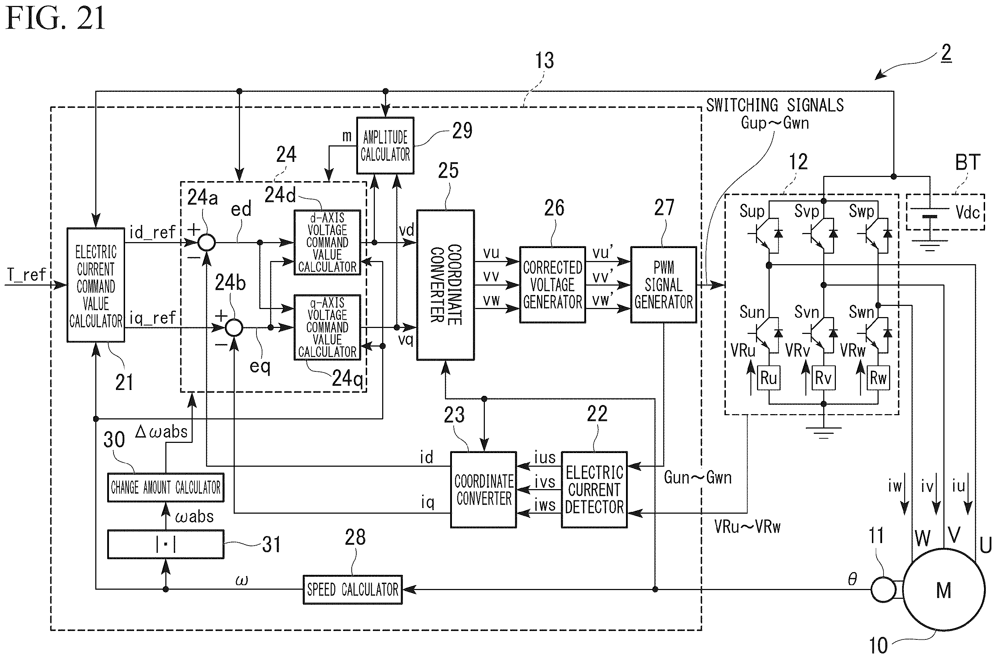

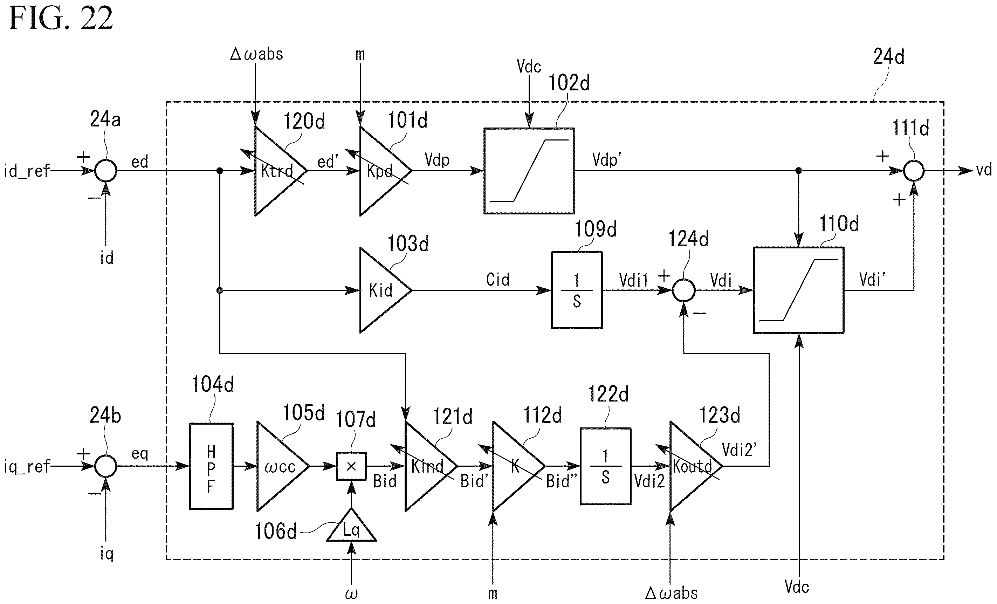

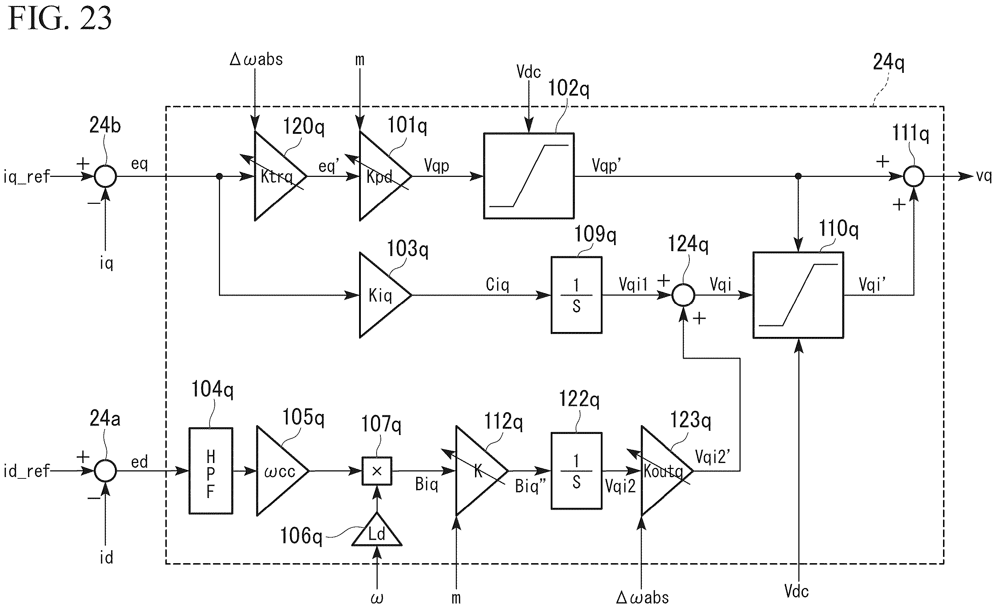

FIG. 21 is a block diagram showing a schematic configuration of a control device 2 of a rotating machine according to Embodiment 2. As shown in FIG. 21, the control device 2 is different from the control device 1 according to Embodiment 1 in that the control device 2 includes an amplitude calculator 29. Moreover, FIGS. 22 and 23 are block diagrams showing configurations of a d-axis voltage command value calculator 24d and a q-axis voltage command value calculator 24q according to Embodiment 2, respectively. The configurations of the d-axis voltage command value calculator 24d and the q-axis voltage command value calculator 24q are also different between Embodiment 1 and Embodiment 2.

As shown in FIG. 21, a d-axis voltage command value vd, a q-axis voltage command value vq, and a DC bus voltage Vdc are input to the amplitude calculator 29. The amplitude calculator 29 calculates a voltage amplitude m based on the following equation (2-1). The voltage amplitude m is a numerical value obtained by standardizing magnitudes of the d-axis voltage command value vd and the q-axis voltage command value vq using the DC bus voltage Vdc of the inverter 12.

$$m = \{(vd^2+vq^2)/(Vdc/2)\}^{0.5} \ldots(2\text{-}1)$$

As shown in FIG. 22, the d-axis voltage command value calculator 24d includes a limiting amplifier 112d. The limiting amplifier 112d inputs a result of multiplying, by K, a corrected other-axis integral input Bid' output from an other-axis integral input amplifier 121d as a secondarily corrected other-axis integral input Bid" to the integrator 122d. "K" denotes a limit gain that is multiplied when an electric current deviation eq of the q-axis that is not a control target as seen from the d-axis voltage command value calculator 24d is an integral input. The voltage amplitude m is input to the limiting amplifier 112d, and the value of the limit gain K is determined based on the value of the voltage amplitude m.

The integrator 122d performs integral calculation by inputting the secondarily corrected other-axis integral input Bid" and outputs an integral calculation result as the other-axis integral output Vdi2.

In the d-axis voltage command value calculator 24d according to the present embodiment, the voltage amplitude m is also input to the d-axis proportional amplifier 101d. The present embodiment is different from Embodiment 1 in that a proportional gain Kpd of the d-axis and the limit gain K are changed in accordance with the voltage amplitude m.

As shown in FIG. 23, the q-axis voltage command value calculator 24q of Embodiment 2 includes a limiting amplifier 112q. The limiting amplifier 112q inputs a result of multiplying, by K, the other-axis integral input Biq output from the multiplier 107q as the corrected other-axis integral input Biq" to the integrator 122q. "K" denotes a limit gain that is multiplied when the electric current deviation ed of the d-axis that is not the control target as seen from the q-axis voltage command value calculator 24q is an integral input. The voltage amplitude m is input to the limiting amplifier 112q, and the value of the limit gain K is determined based on the value of the voltage amplitude m.

The integrator 122q inputs the corrected other-axis integral input Biq" thereinto to perform integral calculation and outputs an integral calculation result as the other-axis integral output Vqi2.

In the q-axis voltage command value calculator 24q according to the present embodiment, the voltage amplitude m is also input to the q-axis proportional amplifier 101q. The present embodiment is different from Embodiment 1 in that a proportional gain Kpq of the q-axis and the limit gain K are changed in accordance with the voltage amplitude m.

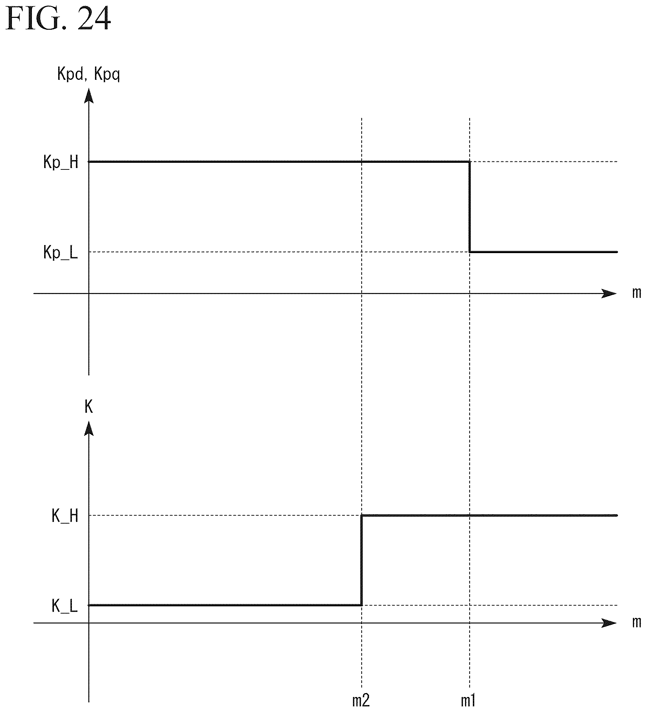

FIG. 24 shows relationships between the voltage amplitude m and the proportional gains Kpd and Kpq and the limit gain K. The vertical axis of the upper graph in FIG. 24 represents the proportional gains Kpd and Kpq, and the vertical axis of the lower graph therein represents the limit gain K. In both the upper and lower sides, the horizontal axis represents the voltage amplitude m. In FIG. 24, m1 denotes a first voltage threshold value, and m2 denotes a second voltage threshold value.

The proportional gains Kpd and Kpq are switched between a first proportional value Kp_H and a second proportional value Kp_L. The second proportional value Kp_L is less than the first proportional value Kp_H.

The limit gain K is switched between a first limit value K_H and a second limit value K_L. The second limit value K_L is less than the first limit value K_H.

As shown in FIG. 24, when the voltage amplitude m is higher than the first voltage threshold value m1, the values of the proportional gains Kpd and Kpq are set to the second proportional value Kp_L. Moreover, when the voltage amplitude m is lower than the first voltage threshold value m1, the proportional gains Kpd and Kpq are set to the first proportional value Kp_H.

When the voltage amplitude m is higher than the second voltage threshold value m2, the limit gain K is set to the first limit value K_H. Moreover, when the voltage amplitude m is lower than the second voltage threshold value m2, the limit gain K is set to the second limit value K_L. Here, the first voltage threshold value m1 is higher than the second voltage threshold value m2. Therefore, when the values of the proportional gains Kpd and Kpq are Kp_L, the value of the limit gain K is K_H.

Thus, only when the limit gain K is a high value K_H (i.e., a state in which non-interference control between the d- and q-axes is sufficiently effective), a process of decreasing the proportional gains Kpd and Kpq is performed, and therefore control stability can be ensured even if the proportional gains Kpd and Kpq are low. Moreover, when the limit gain K is a low value K_L, the proportional gains Kpd and Kpq are set to a high value Kp_H in order that the control stability can be ensured even in a state in which non-interference control between the d- and q-axes is not sufficient. Specifically, the values of Kp_H and Kp_L are set such that responses from the electric current command values id_ref and iq_ref to the rotating machine electric currents iu, iv, and iw are preferably within the range of 300 Hz to 1000 Hz and the range of 100 Hz to 300 Hz, respectively. For example, the value of K_H is set to 0.7 or more, and the value of K_L is set to 0.3 or less.

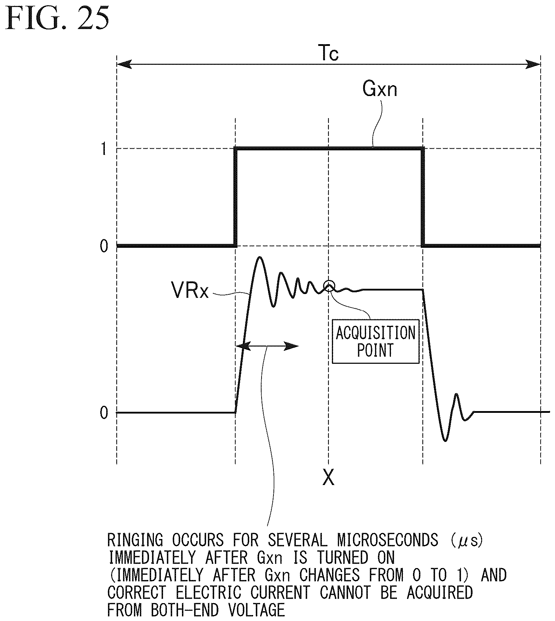

Next, a process of preferably setting the first voltage threshold value m1 will be described. Gxn shown in FIG. 25 denotes an example of a waveform of any one of the switching signals Gun, Gvn, and Gwn in the lower arm-switching elements Sun, Svn, and Swn. Moreover, VRx denotes an example of a waveform of any one of the voltages VRu, VRv, and VRw between both ends of the shunt resistors Ru, Rv, and Rw. In the example shown in FIG. 25, after the signal Gxn changes from 0 to 1, ringing occurs in the voltage VRx between both ends of the shunt resistor for several microseconds (μs). Ringing is a phenomenon in which the voltage between both ends of the shunt resistor changes for a certain period of time when switching is performed in the inverter 12. If the electric current detector 22 acquires the pre-conversion detected electric currents ius, ivs, and iws based on the voltages VRu, VRv, and VRw between both ends of the shunt resistors including such ringing, an error may be contained in the detection result. If an error is contained in the pre-conversion detected electric currents ius, ivs, and iws, an error is also contained in the detected electric current values id and iq after coordinate conversion.

In order to accurately obtain the pre-conversion detected electric currents ius, ivs, and iws, the ON-time of the lower arm-switching elements Sun, Svn, and Swn corresponding thereto is preferably greater than a set time threshold value Tmin in accordance with the convergence time of the ringing. In order to make the ON-time of the lower arm-switching elements Sun, Svn, and Swn greater than the time threshold value Tmin, it is only necessary to set the voltage to be input to the PWM signal generator 27 to a value of Vdc×(Tc-Tmin)/Tc or less as indicated by the dash-dotted line of FIG. 2.

In FIG. 2, the corrected voltage commands vu', vv', and vw' (i.e., the voltage to be input to the PWM signal generator 27) are all Vdc×(Tc-Tmin)/Tc or less. Therefore, it is possible to eliminate errors due to ringing and to obtain the pre-conversion detected electric currents ius, ivs, and iws with high accuracy based on the voltages VRu, VRv, and VRw between both ends of the shunt resistors. In this way, a detection method of obtaining the pre-conversion detected electric currents ius, ivs, and iws based on the voltages VRu, VRv, and VRw between both ends of the shunt resistors corresponding to the three phases is referred to as "three-phase detection."

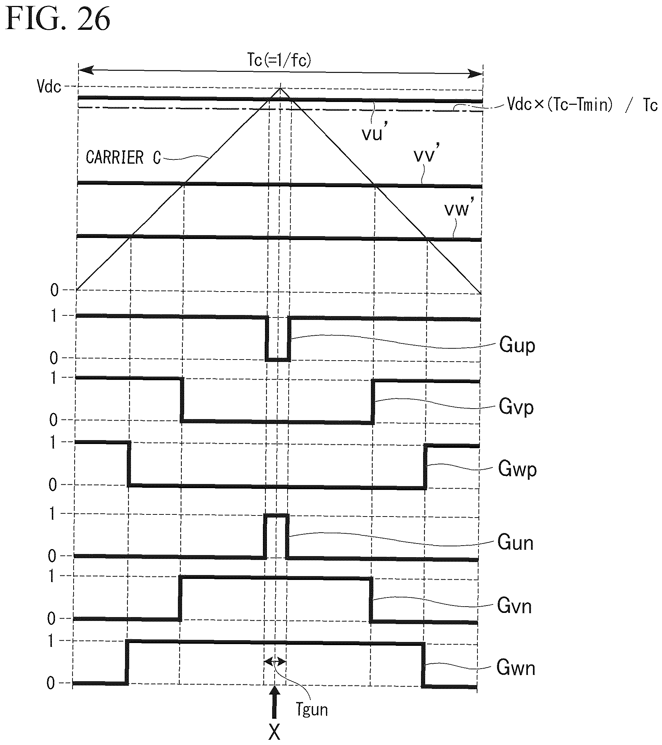

Meanwhile, when the voltage amplitude m increases due to an increase in the rotational speed of the rotating machine 10 or the like, some of the corrected voltage commands vu', vv', and vw' may take a large value close to the maximum value Vdc of the carrier triangle wave C. In the example of FIG. 26, the value of the corrected voltage command vu' is greater than the value of Vdc×(Tc-Tmin)/Tc (hereinafter also referred to as an "upper limit value"). In this case, a difference between the time when Gun is switched from 0 to 1 and the time at a timing X becomes small. Thus, the ringing effect is contained in the voltage VRu between both ends of the shunt resistor of the U-phase acquired at the timing X.

Therefore, the pre-conversion detected electric current for the phase in which the ON-time of the switching signals Gun, Gvn, and Gwn of the lower arm-switching elements is less than the time threshold value Tmin may be generated from the other two phases. In this way, a detection method of obtaining the pre-conversion detected electric current of one of the three phases based on the pre-conversion detected electric currents of the other two phases is referred to as "two-phase detection." For example, when the ON-time of the switching signal Gun is less than the time threshold value Tmin, the pre-conversion detected electric current ius of the U-phase may be calculated according to ius = -ivs-iws. Likewise, a calculation process may be performed as ivs = -ius-iws when the ON-time of the switching signal Gvn is less than the time threshold value Tmin, and a calculation process may be performed as iws = -ius-ivs when the ON-time of the switching signal Gwn is less than the time threshold value Tmin.

A relationship between the number of phases used for electric current detection and the voltage amplitude m is as follows. That is, when the voltage amplitude m is low and instantaneous values of the three-phase corrected voltage commands vu', vv', and vw' are all less than or equal to the upper limit value (Vdc×(Tc-Tmin)/Tc), "three-phase detection" is used. Alternatively, when the voltage amplitude m is high and the instantaneous value of any one of the three-phase corrected voltage commands vu', vv', and vw' is greater than or equal to the upper limit value (Vdc×(Tc-Tmin)/Tc), "two-phase detection" is used. Here, when "three-phase detection" and "two-phase detection" are compared, "three-phase detection" has higher accuracy. Therefore, in order to increase the control accuracy of the rotating machine 10, it is preferable to use "three-phase detection" as much as possible. However, from the viewpoint of increasing the output of the rotating machine 10, it may be preferable to increase the voltage amplitude m and to use "two-phase detection."

Therefore, in the present embodiment, the first voltage threshold value m1 is set to "(Tc-Tmin)/Tc." It can be said that "(Tc-Tmin)/Tc" is a numerical value standardized by dividing the aforementioned upper limit value of "Vdc×(Tc-Tmin)/Tc" by Vdc. By setting the first voltage threshold value m1 in this way, the following effects can be obtained. When the voltage amplitude m is greater than the first voltage threshold value m1, "two-phase detection" is used, and at this time, the proportional gains Kpd and Kpq are set to a low value Kp_L. Thereby, the effect of a decrease in the electric current detection accuracy can be reduced, and vibration and noise generated from the rotating machine 10 can be prevented from increasing. At the same time, the limit gain K is set to a high value K_H, so non-interference control is effective, and control stability is maintained. Moreover, when the voltage amplitude m is less than the first voltage threshold value m1, "three-phase detection" is used, and at this time, the proportional gains Kpd and Kpq are set to a large value Kp_H (see FIG. 24). Since the electric current detection accuracy is high in three-phase detection, the dependence on non-interference control is reduced. Thereby, the vibration and noise occurring in the rotating machine 10 due to the noise contained in the rotational angular velocity ω can be reduced.

It is only necessary to set the second voltage threshold value m2 to a value lower than the first voltage threshold value m1. However, if noise contained in the detected value of the rotational angular velocity ω is not problematic, it is not necessarily necessary to switch the value of the limit gain K at the second voltage threshold value m2. Specifically, if the voltage amplitude m is greater than or equal to the first voltage threshold value m1, the values of the proportional gains Kpd and Kpq are set to Kp_L, otherwise, the values of the proportional gains Kpd and Kpq are set to Kp_H, and the value of the limit gain K may be always set to a constant (K_H) regardless of the voltage amplitude m.

Moreover, in general AC rotating machines including the AC rotating machine 10 according to the present embodiment, the voltage applied to the rotating machine and the rotational speed (or the rotational angular velocity ω) of the rotating machine are approximately in a proportional relationship. Therefore, switching regarding the proportional gains Kpd and Kpq and the limit gain K may be performed using a threshold value related to the rotational speed (or the rotational angular velocity ω) instead of the threshold value related to the voltage amplitude m described above. For example, the rotational speed when the voltage amplitude m coincides with the first voltage threshold value m1 may be a first rotational speed threshold value n1, and the rotational speed when the voltage amplitude m coincides with the second voltage threshold value m2 may be a second rotational speed threshold value n2. In this case, the switching of the proportional gain Kpd or Kpq or the limit gain K based on the comparison between the voltage amplitude m and the threshold values m1 and m2 described above can be replaced with switching based on the comparison between the rotational speed and the threshold values n1 and n2. Similarly, the rotational angular velocity ω when the voltage amplitude m coincides with the first voltage threshold value m1 may be a first rotational angular velocity threshold value ω1, and the rotational angular velocity ω when the voltage amplitude m coincides with the second voltage threshold value m2 may be a second rotational angular velocity threshold value ω2. In this case, the switching of the proportional gain Kpd or Kpq or the limit gain K based on the comparison between the voltage amplitude m and the threshold values m1 and m2 described above can be replaced with switching based on the comparison between the rotational angular velocity ω and the threshold values ω1 and ω2.

Alternatively, switching according to the voltage amplitude m and switching according to the rotational speed (or the rotational angular velocity ω) may be used together. As a specific example, switching of the proportional gains Kpd and Kpq may be performed based on the comparison between the voltage amplitude m and the first voltage threshold value m1, and switching of the limit gain K may be performed based on the comparison between the rotational speed (or the rotational angular velocity ω) and the second rotational speed threshold value n2 (or the second rotational angular velocity threshold value ω2).

The case where the values of the proportional gains Kpd and Kpq are switched based on the comparison between the voltage amplitude m and the first voltage threshold value m1, the comparison between the rotational speed and the first rotational speed threshold value n1, or the comparison between the rotational angular velocity ω and the first rotational angular velocity threshold value ω1 has been described above. However, for example, when the rotating machine electric current becomes excessive and exceeds the threshold value, the values of the proportional gains Kpd and Kpq may be fixed at Kp_H regardless of the voltage amplitude m or the rotational speed. When the rotating machine electric current is excessive, the state where the rotating machine electric current is excessive can be shortened by setting the proportional gains Kpd and Kpq to a large value. Thereby, failure of the control device of the rotating machine 10 can be prevented.

Moreover, when a part of the control device of the rotating machine 10 fails and the remaining parts that do not fail continue to operate, the proportional gains Kpd and Kpq may be always set to a large value (Kp_H) to improve system stability.

Moreover, when the values of the proportional gains Kpd and Kpq are switched between Kp_L and Kp_H, a slope (inclination) may be provided and be gradually switched such that the control is not discontinuous. Likewise, when the value of the limit gain K is switched between K_L and K_H, a slope (inclination) may be provided and be gradually switched.

As described above, in Embodiment 2, the first axis voltage command value calculator (for example, the d-axis voltage command value calculator 24d) calculates the voltage command value (for example, vd) of the first axis using a value obtained by multiplying the corrected first deviation (for example, the corrected d-axis electric current deviation ed') by the proportional gain (for example, Kpd). The proportional gain is switched between the first proportional value Kp_H and the second proportional value Kp_L less than the first proportional value Kp_H. Also, the proportional gain is set to the second proportional value Kp_L when the voltage amplitude m calculated based on the voltage command value is greater than or equal to the first voltage threshold value m1, when the rotational speed of the AC rotating machine 10 is greater than or equal to the first rotational speed threshold value n1, or when the rotational angular velocity $\omega$ of the AC rotating machine 10 is greater than or equal to the first rotational angular velocity threshold value $\omega$1. According to this configuration, when the rotational angular velocity $\omega$ is large, by setting the proportional gain to a small value (Kp_L), the high-frequency noise component included in the corrected first deviation can be reduced, and the control device 2 of the AC rotating machine 10 with low noise can be provided.

Moreover, in Embodiment 2, the first axis voltage command value calculator performs integral calculation using a value obtained by multiplying the second deviation by the limit gain K, and the limit gain K is switched between the first limit value K_H and the second limit value K_L smaller than the first limit value K_H. Also, when the voltage amplitude m is less than or equal to the second voltage threshold value m2 smaller than the first voltage threshold value m1, when the rotational speed of the AC rotating machine 10 is less than or equal to the second rotational speed threshold value n2 smaller than the first rotational speed threshold value n1, or when the rotational angular velocity $\omega$ of the AC rotating machine 10 is less than or equal to the second rotational angular velocity threshold value $\omega$2 smaller than the first rotational angular velocity threshold value $\omega$1, the limit gain K is set to the second limit value K_L. According to this configuration, when the rotational angular velocity $\omega$ is low, the input of the second deviation for the integral calculation can be limited to a small value by setting the limit gain to a small value (K_L). For this reason, the high-frequency noise component included in the second deviation can be reduced, and the control device 2 of the AC rotating machine 10 with low noise can be provided.

Moreover, the inverter 12 includes the upper arm-switching elements Sup, Svp, and Swp, the lower arm-switching elements Sun, Svn, and Swn, and the shunt resistors Ru, Rv, and Rw corresponding to the three phases (U, V, and W). When the voltage amplitude m is smaller than the first voltage threshold value m1, the electric current detector 22 detects the rotating machine electric currents iu, iv, and iw of the three phases based on the voltages VRu, VRv, and VRw between both ends of the corresponding shunt resistors (i.e., "three-phase detection" is used). According to this configuration, it is possible to suppress the inclusion of errors due to the influence of ringing in the detection results of the rotating machine electric currents iu, iv, and iw. Therefore, it is possible to control the AC rotating machine 10 with high accuracy.

Moreover, when the rotating machine electric current exceeds the threshold value (i.e., when the rotating machine electric current is excessive), the proportional gains Kpd and Kpq may be set to the first proportional value Kp_H regardless of the voltage amplitude m or the like. In this case, it is possible to shorten the duration of the state in which the rotating machine electric current is excessive. Therefore, the failure of the control device 2 can be prevented.

Moreover, when a failure occurs in at least one location in the control device 2, the proportional gains Kpd and Kpq may be set to the first proportional value Kp_H regardless of the voltage amplitude m or the like. In this case, the system stability at the time of occurring the failure can be improved to suppress the occurrence of a secondary failure.

Embodiment 3

Next, Embodiment 3 will be described. In the present embodiment, a case where technology described in Embodiment 1 or 2 is applied to the control of a rotating machine included in an electric power-steering device will be described.

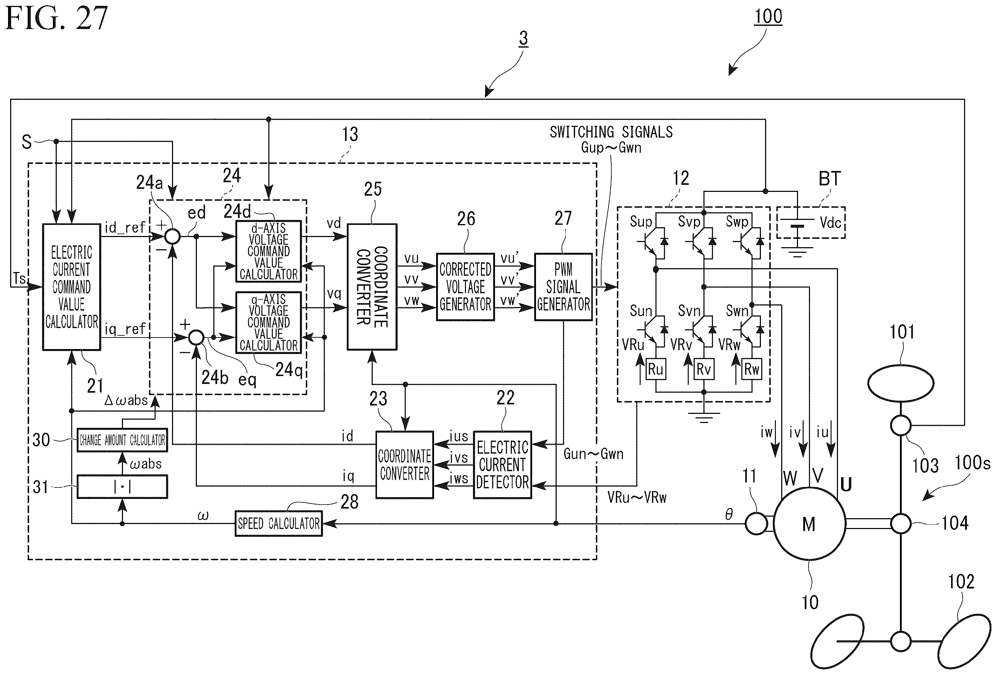

As shown in FIG. 27, an electric power-steering device 100 according to the present embodiment includes a control device 3, a steering wheel 101, a rotating machine 10, and a torque detector 103. The electric power-steering device 100 is mounted on a vehicle. The steering wheel 101 is operated by a driver. By operating the steering wheel 101, front wheels 102 of the vehicle are driven. Because the basic configuration of the control device 3 is similar to that of the control device 1 in Embodiment 1, detailed descriptions thereof will be omitted and differences will be mainly described.

The torque detector 103 detects steering torque Ts of the steering wheel 101 from the driver and outputs a detection result to the control device 3. A driving force of the rotating machine 10 is transmitted to a steering system 100s of the vehicle via a driving force transmission mechanism 104. The steering system 100s includes the steering wheel 101, the front wheels 102, and the like. The electric power-steering device 100 assists the driver in steering the vehicle by using the driving force generated by the rotating machine 10 as assist torque.

The electric current command value calculator 21 in the control device 3 performs a calculation related to a torque current command value (a q-axis electric current command value iq_ref) different from that in Embodiment 1, so this difference will be described. The steering torque Ts and a travel speed S of the vehicle are input to the electric current command value calculator 21, and the electric current command value calculator 21 calculates the q-axis electric current command value iq_ref based on these inputs.

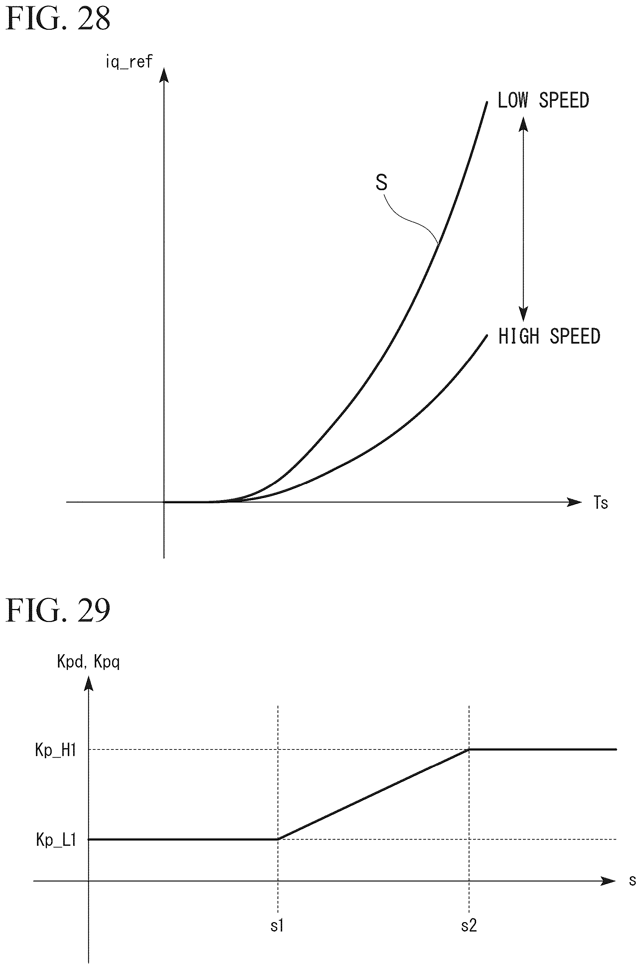

FIG. 28 is a graph showing a set value of the q-axis electric current command value iq_ref according to the steering torque Ts and the travel speed S of the vehicle. As shown in this graph, as the steering torque Ts increases, the value of the electric current command value iq_ref increases, and the gradient of the change thereof increases. Moreover, as the travel speed S of the vehicle increases, the value of the electric current command value iq_ref decreases. **In** addition, the value of the electric current command value iq_ref may be determined by further taking the damping torque obtained based on the rotational angular velocity ω or the like into consideration.

As shown in FIG. 28, as the travel speed S of the vehicle decreases, the gradient of the q-axis electric current command value iq_ref increases with respect to the steering torque Ts. As a result, when detection noise is included in the steering torque Ts, the influence thereof on the q-axis electric current command value iq_ref increases, resulting in the generation of vibration and noise from the rotating machine 10, discomfort to the touch of the steering wheel 101, or the like.

Therefore, in the voltage command value calculation unit 24 in Embodiment 3, the proportional gain Kpd in the d-axis voltage command value calculator 24d and the proportional gain Kpq in the q-axis voltage command value calculator 24q are changed according to the travel speed S of the vehicle as shown in FIG. 29. "Kp_H1" is referred to as a first velocity reference value and "Kp_L1" is referred to as a second velocity reference value. The second velocity reference value Kp_L1 is smaller than the first velocity reference value Kp_H1.

When the travel speed S of the vehicle is less than or equal to s1, the values of the proportional gains Kpd and Kpq are set to Kp_L1. Thus, it is possible to suppress the sensitive reaction of the q-axis electric current command value iq_ref to the pulsation of the steering torque Ts by setting the proportional gains Kpd and Kpq to be low. Moreover, when the travel speed S of the vehicle is s2 or more, the influence of the pulsation of the steering torque Ts on the q-axis electric current command value iq_ref is small, and therefore the proportional gains Kpd and Kpq are set to a high value Kp_H1. Thus, it is possible to provide an electric power-steering device in which the occurrence of vibration and abnormal noise of the rotating machine 10 due to noise included in the detected steering torque value or the discomfort that the driver feels from the steering wheel 101 is suppressed by switching the proportional gains Kpd and Kpq in accordance with the travel speed S of the vehicle.

As shown in FIG. 29, when the travel speed S of the vehicle is within the range of s1 to s2, the values of the proportional gains Kpd and Kpq are continuously changed within the range of Kp_H1 to Kp_L1. Thereby, it is possible to suppress the discomfort of the like that the driver feels due to rapidly switching the set values of the proportional gains Kpd and Kpq. The proportional gains Kpd and Kpq may be switched stepwise between Kp_H1 and Kp_L1.

As described above, the electric power-steering device 100 according to the present embodiment includes the control device 3, the AC rotating machine 10, and the driving force transmission mechanism 104 configured to transmit the driving force of the AC rotating machine 10 to the steering system 100s of the vehicle. According to such a configuration, the electric power-steering device 100 having both quietness and steering stability can be provided.

Moreover, in the present embodiment, the proportional gains Kpd and Kpq are switched between the first velocity reference value Kp_H1 and the second velocity reference value Kp_L1 smaller than the first velocity reference value Kp_H1. When the travel speed S of the vehicle is smaller than the threshold value s2, the voltage command value calculation unit 24 sets the proportional gains Kpd and Kpq to a value smaller than the first velocity reference value Kp_H1. According to this configuration, quietness can be improved even in situations where the vehicle speed is low and steering noise is likely to be echoed.

Embodiment 4

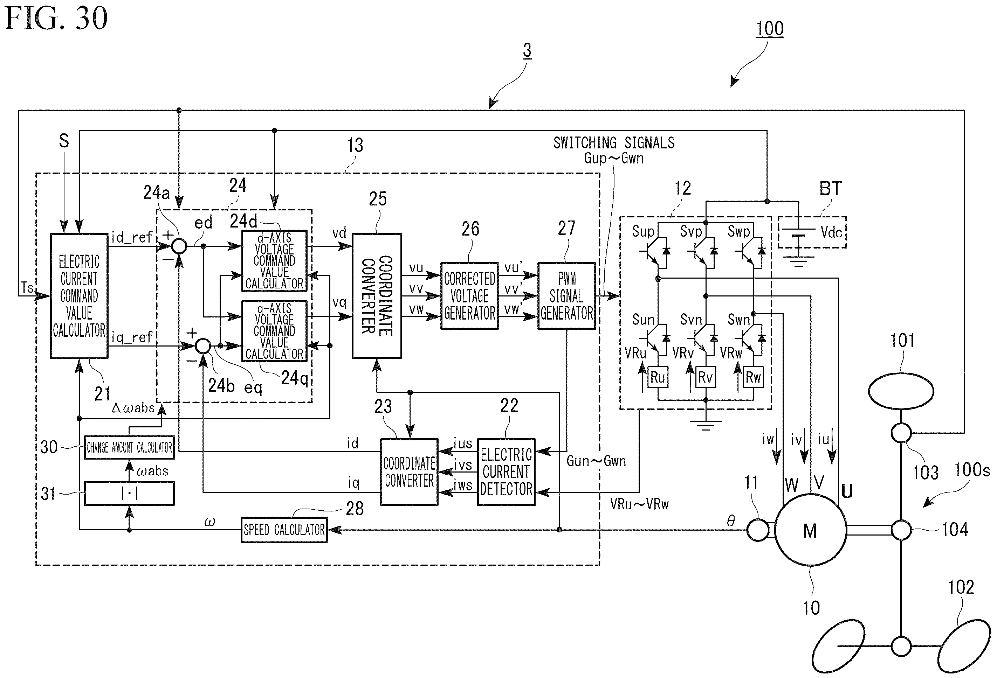

Next, Embodiment 4 will be described. As shown in FIG. 30, an electric power-steering device 100 according to the present embodiment includes a control device 3 similar to that of Embodiment 3. The technology of Embodiment 4 is different from the technology described in Embodiment 3 in that a detected value to be input to the voltage command value calculation unit 24 is changed from a travel speed S of a vehicle to steering torque Ts, and that a part of calculation content in the voltage command value calculation unit 24 is different. The others are similar to those of Embodiment 3, so descriptions thereof will be omitted.

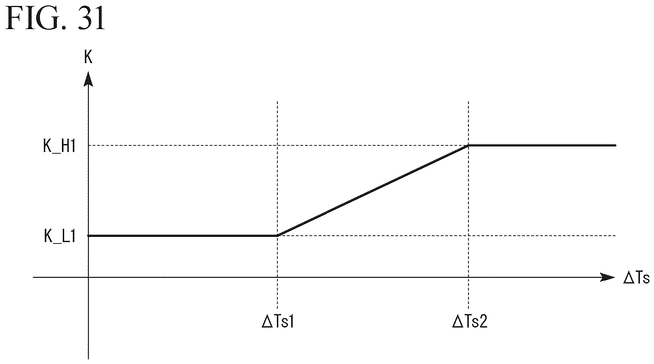

In FIG. 29 described in Embodiment 3, in each state where the travel speed S of the vehicle is low or high, as the steering torque Ts decreases, the inclination of the q-axis electric current command value iq_ref with respect to the steering torque Ts decreases. That is, a margin in steering stability increases as the steering torque Ts decreases, so there is room to reduce the limit gain K described in Embodiment 2. Therefore, in the voltage command value calculation unit 24 according to Embodiment 4, the limit gain K is changed as shown in FIG. 31.

In FIG. 31, "ΔTs" denotes an amount of change per unit time of the steering torque Ts, "K_H1" denotes a first torque reference value, and "K_L1" denotes a second torque reference value. The second torque reference value K_L1 is smaller than the first torque reference value K_H1. The limit gain K changes in the range of K_L1 to K_H1 in accordance with the magnitude of the amount of change ΔTs. Specifically, when ΔTs is less than or equal to the first torque threshold value ΔTs1, the value of the limit gain K is set to K_L1. When ΔTs is greater than or equal to the second torque threshold value ΔTs2, the value of the limit gain K is set to K_H1. When ΔTs is in the range of ΔTs1 to ΔTs2, the value of the limit gain K continuously changes within the range of K_L1 to K_H1. Thereby, it is possible to reduce the vibration and noise of the rotating machine 10 in a region where the change in the steering torque Ts is small.

In FIG. 31, the horizontal axis represents ΔTs. However, a similar effect can be obtained even if the horizontal axis represents the gradient ($\Delta$iq_ref/$\Delta$Ts) of the graph of FIG. 28. The above-described gradient ($\Delta$iq_ref/$\Delta$Ts) is referred to as an "electric current torque gradient" in the present specification. That is, the electric current torque gradient is a ratio of an amount of change ($\Delta$iq_ref) in the q-axis electric current command value iq_ref to an amount of change ($\Delta$Ts) in the steering torque Ts. When the electric current torque gradient is less than the threshold value, the proportional gains Kpd and Kpq may be set to a small value Kp_L1. Moreover, when at least one of the electric current command values iq_ref and id_ref is smaller than the threshold value or when the steering torque Ts is less than the threshold value, the proportional gains Kpd and Kpq may be set to a small value (for example, Kp_L1).

When the steering torque Ts or the electric current command values iq_ref and the id_ref are small, the steering noise is more noticeable. Therefore, Embodiment 4 proposes a configuration in which the proportional gains Kpd and Kpq are set to values lower than the first velocity reference value Kp_H1 when the electric current command values iq_ref and the id_ref are less than or equal to the threshold value, when a gradient (an electric current torque gradient $\Delta$iq_ref/$\Delta$Ts) in a graph representing the relationship between the steering torque Ts and the torque current command value iq_ref is smaller than the threshold value, or when the amount of change $\Delta$Ts per unit time of the steering torque Ts is smaller than the first torque threshold value $\Delta$Ts1. Thereby, in a situation where the steering noise is likely to be noticeable, the non-interference control can be weakened to ensure quietness.

In Embodiments 3 and 4, instead of inputting the rotational angular velocity $\omega$ to the inductance amplifiers 106d and 106q in accordance with non-interference control, a result of the rotational angular velocity $\omega$ passing through a low-pass filter may be input thereto. The cut-off frequency of the low-pass filter is preferably greater than the upper limit value (for example, 5 Hz) of the steering frequency of the electric power-steering device 100. In this case, an effect of reducing the abnormal noise and vibration of the rotating machine 10 caused by the noise component contained in the rotational angular velocity $\omega$ by introducing non-interference control is obtained. Therefore, a quiet electric power-steering device 100 can be provided.

While Embodiments 1 to 4 have been described above, the present disclosure is not limited to the above-described embodiments and can be freely changed within the scope of the present disclosure. Moreover, the above-described Embodiments 1 to 4 can be appropriately combined.

Each constituent element provided in the control devices 1 to 4 of the rotating machine and the electric power-steering device 100 described above has a computer system therein. Also, the process in each constituent element provided in the control devices 1 to 4 of the rotating machine and the electric power-steering device 100 described above may be carried out by recording a program for implementing the function of each constituent element provided in the control devices 1 to 4 of the rotating machine and the electric power-steering device 100 described above on a computer-readable recording medium, and by reading the program recorded on the recording medium into the computer system to execute the program. Here, "reading the program recorded on the recording medium into the computer system to execute the program" includes installing the program in the computer system. The term "computer system" as used herein includes an operating system (OS) and hardware such as peripheral devices.

Moreover, the "computer system" may include a plurality of computer devices connected together via networks including the Internet, a WAN, a LAN, and communication lines such as a dedicated line. Moreover, "the computer-readable recording medium" refers to a flexible disk, a magneto-optical disk, a ROM. a portable medium such as a CD-ROM, or a storage device such as a hard disk provided inside the computer system. Thus, the recording medium storing a program may be a non-transient recording medium such as a CD-ROM.

Moreover, the recording medium also includes an internally or externally provided recording medium that can be accessed from a distribution server to distribute the program. The program may be divided into a plurality of segments, which are downloaded at different timings and then combined in each constituent element provided in the control devices 1 to 4 of the rotating machine and the electric power-steering device 100, or the distribution servers for distributing the segments of the divided program may be different. Furthermore, "the computer-readable recording medium" also includes one that retains a program for a predetermined period of time such as a volatile memory (RAM) inside a computer system that acts as a server or a client when a program is sent via a network. Moreover, the above-described program may be for implementing a part of the above-described functions. Furthermore, the above-described program may be a so-called difference file (difference program), which can implement the above-described functions in combination with a program already recorded in the computer system.

[Reference Signs List]

   1 to 4 Control device
   10 AC rotating machine
   12 Inverter
   22 Electric current detector
   24d, 24q First axis voltage command value calculator, second axis voltage command value calculator
   100 Electric power-steering device
   104 Driving force transmission mechanism
   id, iq Detected electric current value

id_ref, iq_ref Electric current command value
iq_ref Torque current command value
iu, iv, iw Rotating machine electric current
K Limit gain
K_H First limit value
K_L Second limit value
Kp_H First proportional value
Kp_H1 First velocity reference value
Kp_L Second proportional value
Kp_L1 Second velocity reference value
Kpd, Kpq Proportional gain
Ld d-axis inductance
m Voltage amplitude
m1 First voltage threshold value
m2 Second voltage threshold value
n1 First rotational speed threshold value
n2 Second rotational speed threshold value
Ru, Rv, Rw Shunt resistor
S Travel speed
100s Steering system of vehicle
Sun, Svn, Swn Lower arm-switching element
Sup, Svp, Swp Upper arm-switching element
Ts Steering torque
vd, vq First axis voltage command value, second axis voltage command value
VRu, VRv, VRw Voltage between both ends
vu, vv, vw Voltage command value
ΔTs Amount of change in steering torque
ω Rotational angular velocity
ω1 First rotational angular velocity threshold value
ω2 Second rotational angular velocity threshold value
ωcc Response angular frequency

**Claims**

1. A control device for an AC rotating machine, comprising:

   an inverter configured to apply a voltage to the AC rotating machine;
   a DC power supply configured to supply DC power to the inverter;
   an electric current detector configured to detect a rotating machine electric current flowing through the AC rotating machine;
   a first axis voltage command value calculator configured to calculate a voltage command value of a first axis between two rotational axes of the AC rotating machine; and
   a second axis voltage command value calculator configured to calculate a voltage command value of a second axis between the two rotational axes,
   wherein the first axis voltage command value calculator calculates the voltage command value of the first axis based on

   a corrected first deviation obtained by multiplying, by a correction gain, a first deviation that is a deviation between an electric current command value of the first axis and a detected electric current value of the first axis of the rotating machine electric current, a second deviation that is a deviation between an electric current command value of the second axis and a detected electric current value of the second axis of the rotating machine electric current, and a rotational angular velocity of the AC rotating machine, and

   wherein a set value of the correction gain is increased when a physical quantity in the AC rotating machine has rapidly changed or when an output voltage of the DC power supply has increased.

2. The control device for an AC rotating machine according to claim 1,
   wherein the first axis voltage command value calculator sets an interference compensation term to zero when the physical quantity in the AC rotating machine has rapidly changed or when the output voltage of the DC power supply has increased.

3. The control device for an AC rotating machine according to claim 1 or 2,
   wherein the first axis voltage command value calculator performs integral calculation using a value obtained by multiplying the second deviation by the rotational angular velocity of the AC rotating machine, an inductance of the second axis, and a response angular frequency for adjusting a frequency response of the rotating machine electric current to the electric current command value, and calculates an interference compensation term based on a result of the integral calculation.

4. The control device for an AC rotating machine according to claim 2 or 3,
   wherein the first axis voltage command value calculator sets, to zero, an input value for integral calculation for calculating the interference compensation term when the first deviation is greater than a threshold value.

5. The control device for an AC rotating machine according to any one of claims 1 to 4,

   wherein the physical quantity is the rotational angular velocity of the AC rotating machine, and wherein the first axis voltage command value calculator increases the set value of the correction gain when the rotational angular velocity has rapidly decreased.

6. The control device for an AC rotating machine according to any one of claims 1 to 4,

wherein the physical quantity is the rotating machine electric current, and
wherein the first axis voltage command value calculator increases the set value of the correction gain when the rotating machine electric current has rapidly increased to a target value.

7. The control device for an AC rotating machine according to any one of claims 1 to 4,

wherein the physical quantity is the electric current command value of the first axis, and
wherein the first axis voltage command value calculator increases the set value of the correction gain when the electric current command value of the first axis has rapidly decreased.

8. The control device for an AC rotating machine according to any one of claims 1 to 4,

wherein the physical quantity is an external factor of the AC rotating machine other than the output voltage of the DC power supply, and
wherein the first axis voltage command value calculator increases the set value of the correction gain when the external factor has rapidly changed.

9. The control device for an AC rotating machine according to any one of claims 1 to 8,

wherein the first axis voltage command value calculator calculates the voltage command value of the first axis using a value obtained by multiplying the corrected first deviation by a proportional gain,
wherein the proportional gain is switched between a first proportional value and a second proportional value less than the first proportional value, and
wherein the proportional gain is set to the second proportional value when a voltage amplitude calculated based on the voltage command value is greater than or equal to a first voltage threshold value, when a rotational speed of the AC rotating machine is greater than or equal to a first rotational speed threshold value, or when the rotational angular velocity of the AC rotating machine is greater than or equal to a first rotational angular velocity threshold value.

10. The control device for an AC rotating machine according to claim 9,

wherein the first axis voltage command value calculator executes integral calculation using a value obtained by multiplying the second deviation by a limit gain,
wherein the limit gain is switched between a first limit value and a second limit value less than the first limit value, and
wherein the limit gain is set to the second limit value when the voltage amplitude is less than or equal to a second voltage threshold value less than the first voltage threshold value, when the rotational speed of the AC rotating machine is less than or equal to a second rotational speed threshold value less than the first rotational speed threshold value, or when the rotational angular velocity of the AC rotating machine is less than or equal to a second rotational angular velocity threshold value less than the first rotational angular velocity threshold value.

11. The control device for an AC rotating machine according to claim 9 or 10,

wherein the inverter includes three sets corresponding to three phases, each of the three sets including an upper arm-switching element, a lower arm-switching element, and a shunt resistor, and
wherein the electric current detector detects the rotating machine electric current of each of the three phases based on a voltage between both ends of the shunt resistor corresponding thereto when the voltage amplitude is less than the first voltage threshold value.

12. The control device for an AC rotating machine according to any one of claims 9 to 11,
wherein the first axis voltage command value calculator increases a set value of the proportional gain when the rotating machine electric current exceeds a threshold value.

13. The control device for an AC rotating machine according to any one of claims 9 to 11,
wherein the first axis voltage command value calculator increases a set value of the proportional gain when a failure has occurred in at least one location in the control device for the AC rotating machine.

14. An electric power-steering device, comprising:

the control device for an AC rotating machine according to any one of claims 1 to 13;
the AC rotating machine; and
a driving force transmission mechanism configured to transmit a driving force of the AC rotating machine to a steering system of a vehicle.

15. The electric power-steering device according to claim 14,

wherein the first axis voltage command value calculator calculates the voltage command value of the first axis using a value obtained by multiplying the corrected first deviation by a proportional gain,
wherein the proportional gain is switched between a first velocity reference value and a second velocity reference value less than the first velocity reference value, and
wherein the first axis voltage command value calculator sets the proportional gain to a value less than the first velocity reference value when a travel speed of the vehicle is less than a threshold value.

16. The electric power-steering device according to claim 15,
wherein the first axis voltage command value calculator sets the proportional gain to a value less than the first velocity reference value when the electric current command value is less than or equal to a threshold value, when steering torque is less than or equal to a threshold value, when a gradient in a graph indicating a relationship between the steering torque and a torque current command value is less than a threshold value, or when an amount of change per unit time of the steering torque is less than a threshold value.

17. The electric power-steering device according to any one of claims 14 to 16,
wherein the first axis voltage command value calculator executes integral calculation using a result when the rotational angular velocity of the AC rotating machine passes through a low-pass filter whose cutoff frequency is higher than an upper limit value of a steering frequency of the electric power-steering device.

# FIG. 1

# FIG. 2

FIG. 3

FIG. 4

FIG. 5

```
        ( START )
            |
            v
+---------------------------+
|   Vmin = min(vu,vv,vw)     |----- S11
+---------------------------+
            |
            v
+---------------------------+
|   voffset = 0.5Vdc—Vmin    |----- S12
+---------------------------+
            |
            v
+---------------------------+
|    vu' = vu—voffset        |
|    vv' = vv—voffset        |----- S13
|    vw' = vw—voffset        |
+---------------------------+
            |
            v
        ( END )
```

# FIG. 6

EP 4 496 208 A1

FIG. 7

TRANSMISSION CHARACTERISTICS FROM iq_ref TO iq

BODE PLOT DIAGRAM

EP 4 496 208 A1

FIG. 8

Ktrd, Ktrq

Ktr_H

Ktr_L

$\Delta \omega abs$

$\Delta \omega 1 < 0$     $\Delta \omega 2$

FIG. 9

Koutd, Koutq

1

0

$\Delta \omega abs$

$\Delta \omega 1 < 0$     $\Delta \omega 2$

FIG. 10

Kind

1

0

ed

Ith

# FIG. 11

FIG. 12

# FIG. 13

EP 4 496 208 A1

FIG. 14

FIG. 15

FIG. 16

FIG. 17

# FIG. 18

EP 4 496 208 A1

FIG. 19

FIG. 20

FIG. 21

FIG. 22

FIG. 23

## FIG. 24

# FIG. 25

RINGING OCCURS FOR SEVERAL MICROSECONDS ($\mu$s)
IMMEDIATELY AFTER Gxn IS TURNED ON
(IMMEDIATELY AFTER Gxn CHANGES FROM 0 TO 1) AND
CORRECT ELECTRIC CURRENT CANNOT BE ACQUIRED
FROM BOTH-END VOLTAGE

# FIG. 26

FIG. 27

FIG. 28

FIG. 29

# FIG. 30

FIG. 31

## INTERNATIONAL SEARCH REPORT

International application No.

**PCT/JP2022/011911**

### A. CLASSIFICATION OF SUBJECT MATTER

*H02P 21/22*(2016.01)i
FI: H02P21/22

According to International Patent Classification (IPC) or to both national classification and IPC

### B. FIELDS SEARCHED

Minimum documentation searched (classification system followed by classification symbols)

H02P21/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 11-98900 A (HITACHI, LTD.) 09 April 1999 (1999-04-09) paragraphs [0008]-[0055], fig. 1-10, in particular, paragraphs [0051]-[0054], fig. 10 | 1-17 |
| A | JP 2003-88193 A (TOYO ELECTRIC MFG. CO., LTD.) 20 March 2003 (2003-03-20) paragraphs [0002], [0009]-[0011], fig. 1-3 | 1-17 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **12 May 2022** | **24 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/011911**

| Patent document cited in search report | | | Publication date (day/month/year) | Patent family member(s) | Publication date (day/month/year) |
|---|---|---|---|---|---|
| JP | 11-98900 | A | 09 April 1999 | (Family: none) | |
| JP | 2003-88193 | A | 20 March 2003 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010119245 A